(19) Europäisches Patentamt / European Patent Office / Office européen des brevets

(11) **EP 3 729 327 B1**

(12) **FASCICULE DE BREVET EUROPEEN**

(45) Date de publication et mention de la délivrance du brevet:
**05.02.2025 Bulletin 2025/06**

(21) Numéro de dépôt: **18816021.2**

(22) Date de dépôt: **07.12.2018**

(51) Classification Internationale des Brevets (IPC):
**G06V 20/64** *(2022.01)*    **G06T 7/11** *(2017.01)*
**G06T 7/73** *(2017.01)*    G06V 20/58 *(2022.01)*

(52) Classification Coopérative des Brevets (CPC):
**G06T 7/75; G06T 7/11; G06V 20/653;**
G06T 2207/10028; G06T 2207/30232;
G06T 2207/30248; G06V 20/58; G06V 2201/08

(86) Numéro de dépôt international:
**PCT/EP2018/083915**

(87) Numéro de publication internationale:
**WO 2019/121056 (27.06.2019 Gazette 2019/26)**

(54) **METHODE DE RECONNAISSANCE D'OBJETS DANS UNE SCENE OBSERVEE EN TROIS DIMENSIONS**

VERFAHREN ZUR ERKENNUNG VON OBJEKTEN IN EINER DREIDIMENSIONALEN SZENE

METHOD FOR RECOGNISING OBJECTS IN A THREE DIMENSIONAL SCENE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1762726**

(43) Date de publication de la demande:
**28.10.2020 Bulletin 2020/44**

(73) Titulaire: **Commissariat à l'Energie Atomique et aux Energies Alternatives
75015 Paris (FR)**

(72) Inventeur: **CHAOUCH, Mohamed
94110 ARCUEIL (FR)**

(74) Mandataire: **Atout PI Laplace
Immeuble Up On
25 Boulevard Romain Rolland
CS 40072
75685 Paris Cedex 14 (FR)**

(56) Documents cités:
**EP-A1- 3 144 900    EP-A2- 2 549 434**

**Description**

L'invention concerne le domaine de la détection et de la reconnaissance d'objets dans une scène observée par un capteur d'images en trois dimensions.

L'invention porte précisément sur une méthode de reconnaissance d'objets dans une scène observée en trois dimensions, la méthode comprenant une segmentation des éléments de la scène puis une mise en correspondance des segments avec des modèles géométriques prédéfinis.

L'invention s'applique dans le domaine de la vision par ordinateur et de l'analyse automatique de scènes en 3D pour toute application industrielle qui nécessite la détection et la reconnaissance automatique d'objets dans une scène capturée en trois dimensions. Les applications possibles de l'invention incluent notamment la robotique industrielle, les véhicules autonomes, les bâtiments intelligents, la vidéo surveillance, la vidéo protection mais aussi les applications liées à la réalité virtuelle.

Un problème technique général que cherche à résoudre l'invention concerne l'analyse sémantique automatique et temps réel d'une scène capturée par un capteur ou une caméra en trois dimensions. Plus précisément, un objectif de l'invention consiste, à partir d'un ensemble de points 3D capturés par une caméra filmant une scène 3D, à modéliser la scène, la décomposer en différents éléments correspondants aux éléments de la scène et à caractériser sémantiquement et géométriquement chaque élément.

Un problème technique plus spécifique concerne la capacité à reconnaitre des objets dans une scène observée en trois dimensions lorsque ces objets sont partiellement occultés. L'occultation d'un objet peut provenir d'une autre partie du même objet ou d'un autre objet. Une partie d'un objet peut aussi être occultée car elle se trouve en dehors du champ de vision de la caméra ou du capteur 3D.

La littérature comporte de nombreux travaux sur la reconnaissance d'objets en trois dimensions. On peut citer sans être exhaustif les solutions décrites dans les brevets ou demandes de brevet EP 2549434, US 20160154999, US 9396545, US 20150288947 ou encore US 8885925.

Un inconvénient général de ces méthodes est qu'elles ne proposent pas de solution efficace pour réaliser une reconnaissance fine des éléments d'une scène 3D lorsque certains de ces éléments sont partiellement occultés.

Il existe plusieurs niveaux de finesse dans la reconnaissance des objets 3D dans une scène. Par exemple pour la reconnaissance de la classe véhicule dans une scène routière, on peut définir quatre niveaux de finesse ou plus. Le premier niveau de reconnaissance concerne le gabarit d'un véhicule : deux roues, véhicules légers, véhicules intermédiaires, poids lourds et autocars à deux essieux, poids lourds et autocars à trois essieux et plus. Le deuxième niveau de reconnaissance concerne le type de véhicule : vélo, moto, voiture, van, camion, bus, poids lourds. Le troisième niveau de reconnaissance concerne la catégorie du véhicule : routière, sportive, cruiser ou scooter pour les motos, urbaine, citadine, compact, berline, SUV, Pick-up pour les voitures. Le quatrième niveau de reconnaissance concerne la marque et le modèle du véhicule.

Alors que les méthodes de reconnaissance d'objets 3D selon l'art antérieur se limitent à des niveaux de reconnaissance grossiers, l'invention permet d'effectuer une reconnaissance avec tous les niveaux de finesse.

Par ailleurs, il est connu qu'une seule prise de vue d'une scène, c'est-à-dire à partir d'un seul point de vue, n'est pas suffisante pour modéliser entièrement une scène ou un sujet. En effet, du fait des problèmes d'occultation, d'auto-occultation ou de limitation du champ de vision de la caméra, il est en général nécessaire de réaliser plusieurs prises de vue d'une même scène afin de pouvoir modéliser complètement la scène et effectuer une reconnaissance précise des éléments qui la compose.

Les méthodes de l'art antérieur utilisent en général plusieurs acquisitions de la même scène depuis différents points de vue pour produire plusieurs nuages de points associés. Les nuages de points recueillis sont ensuite regroupés et transformés dans un même système de coordonnées unique afin de reconstruire la scène selon tous les points de vue. Cette technique, notamment connue sous l'appellation « 3D scanning pipeline », est décrite dans la référence [1].

L'invention permet de supprimer les inconvénients des méthodes de reconnaissance d'objets 3D selon l'art antérieur en proposant une nouvelle méthode basée sur trois étapes principales. L'image acquise par un capteur en trois dimensions est tout d'abord segmentée afin de détecter les différents éléments de la scène. Ensuite, un nombre réduit de poses candidates est déterminé à partir de caractéristiques géométriques des segments détectés afin de limiter le nombre d'opérations à effectuer et ainsi de rester compatible d'une application temps réelle. Enfin, une recherche de la pose optimale parmi les poses candidates et d'un modèle géométrique optimal est réalisée pour chaque segment détecté en prenant en compte les occultations partielles éventuelles du segment. Pour arriver à ce résultat, chaque modèle géométrique candidat est incrusté dans la scène en trois dimensions selon la pose candidate et une comparaison avec le segment détecté d'une part et les autres segments de la scène d'autre part est réalisée.

L'invention permet ainsi de modéliser entièrement une scène à partir d'une seule acquisition 3D de la scène faite par un scanner 3D depuis un seul point de vue. Un scanner 3D mesure les positions dans un système de coordonnées d'un échantillonnage de points 3D de la surface d'une scène. Les coordonnées des points 3D recueillies sont généralement clairsemées, c'est-à-dire que les surfaces des éléments de la scène sont représentées de manière discrète. L'invention propose de mettre en correspondance le nuage de points discret fournit par le scanner 3D lors d'une observation d'une scène et des modèles géométriques continus (généralement surfaciques) prédéfinis à l'avance. Pour se rapprocher au mieux d'une observation continue de la scène, l'invention met en oeuvre une technique particulière d'incrustation des modèles géométriques dans la scène 3D. Des points 3D virtuels sont calculés sur ces modèles, très proches des points 3D réellement acquis par le scanner 3D. En d'autres termes, l'invention exploite les paramètres d'acquisition du scanner 3D pour sélectionner sur le modèle géométrique les points 3D les plus proches d'un objet de la scène. L'intérêt de cette technique est d'optimiser le choix des points 3D sur les modèles pour une meilleure mise en correspondance avec les points 3D acquis par le scanner 3D.

L'invention a pour objet une méthode de reconnaissance d'objets dans une image en trois dimensions, selon la revendication 1.

D'autres caractéristiques et avantages de la présente invention apparaîtront mieux à la lecture de la description qui suit en relation aux dessins annexés qui représentent :

- La figure 1, un organigramme détaillant les étapes de mise en oeuvre de la méthode de reconnaissance d'objets dans une scène 3D selon l'invention,
- Les figures 2a et 2b, deux illustrations du résultat d'une étape de segmentation d'éléments supports appliquée à une image d'une scène 3D,
- Les figures 3a et 3b, deux illustrations du résultat d'une étape de segmentation d'éléments structurants appliquée à une image d'une scène 3D,
- Les figures 4a à 4d, quatre illustrations, selon quatre points de vue différents, d'un segment structurant associé à une boite englobante, le segment comprenant un plan dominant,
- Les figures 5a à 5p, seize illustrations de l'incrustation d'un modèle géométrique de la classe des voitures dans une scène 3D selon seize poses candidates différentes,
- Les figures 6a à 6d, quatre illustrations, selon quatre points de vue différents, des différents ensemble de points utilisés pour calculer un score de mise en correspondance entre un modèle géométrique et un segment,
- Les figures 7a et 7b, deux illustrations, respectivement en vue de droite et en vue de dessus, des résultats de la reconstruction complète d'une scène dans laquelle chaque segment est reconstruit par un modèle géométrique optimal incrusté selon une pose optimale,
- La figure 8, un schéma d'un système de reconnaissance d'objets en 3D selon l'invention.

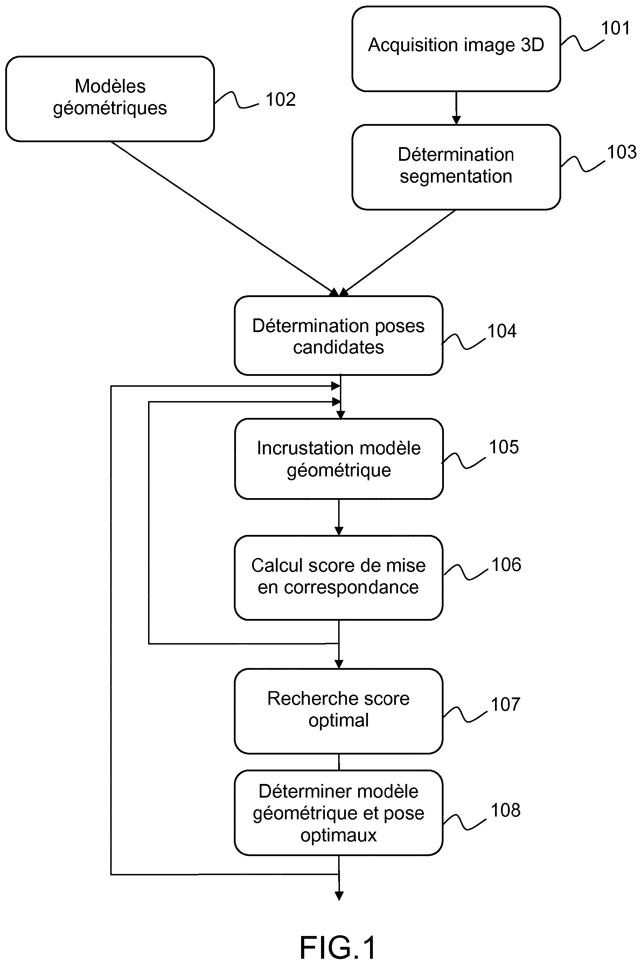

La figure 1 schématise, sur un organigramme, les principales étapes de mise en oeuvre de la méthode de reconnaissance d'objets dans une scène 3D selon l'invention.

Une première étape 101 de la méthode consiste à acquérir une ou plusieurs images 3D capturant une scène observée en trois dimensions.

Cette acquisition peut être réalisée au moyen de tout capteur 3D ou caméra 3D ou dispositif équivalent permettant d'acquérir un nuage de points représentant une scène observée, chaque point étant défini par trois coordonnées spatiales. Il existe notamment trois types de capteurs 3D permettant de réaliser la première étape 101 de l'invention.

Un premier exemple de capteur 3D est un capteur LIDAR (Light Détection and Ranging) qui est un type de scanner 3D actif basé sur la télédétection par laser. Pour acquérir une observation 3D d'une scène, le capteur LIDAR émet un rayon laser qui scanne la scène entièrement. L'acquisition en 3D consiste à mesurer des distances fondées sur l'analyse des propriétés de faisceaux de lumière renvoyés par les objets de la scène vers le capteur LIDAR. Généralement, la distance entre le capteur et la surface de l'objet étudié est mesurée en comptant le temps nécessaire au trajet aller-retour de l'impulsion du faisceau laser réfléchi. Les capteurs LIDAR ont la capacité de traiter entre 10 000 à 100 000 points par seconde. Les données produites par l'acquisition du capteur LIDAR sont un nuage de points 3D positionnant chacun des points échantillonnés par rapport au scanner 3D.

Un second exemple de capteur 3D est une caméra à temps de vol (ou TOF pour « time of Flight » en anglais). Ce type de capteurs 3D fournit une image de profondeur où chaque pixel correspond à la distance entre un point de la scène et un point spécifique.

Un troisième exemple de capteur 3D est un scanner stéréoscopique, composé généralement d'un ensemble de caméras ou d'un couple composé d'une caméra et d'un projecteur, associés à des traitements spécifiques tels que des calculs de disparité.

Dans la suite, on désignera de façon indifférenciée le dispositif d'acquisition 3D par les termes capteur 3D ou scanner 3D ou caméra 3D.

Dans la première étape 101 du procédé objet de l'invention, la scène est observée à partir d'un capteur 3D qui produit un nuage de points 3D. Un nuage de points 3D, $\mathbf{P} = \{\mathbf{p_i} = (x_i, y_i, z_i); a \leq i < N\}$, est une série de N données composées chacune de trois coordonnées $\mathbf{p_i} = (x_i, y_i, z_i)$ positionnant chacun des points échantillonnés par rapport au capteur 3D. Si le capteur est positionné à l'origine du repère, chaque point 3D peut être exprimé par les coordonnées sphériques $\mathbf{p_i} = (r_i, \varphi_i,$

$\theta_i$). $r_i$ représente la distance du capteur au point $p_i$. $\varphi_i$ et $\theta_j$ sont les angles d'élévation et d'azimut, formés entre la ligne allant de l'origine du capteur 3D au point $p_i$ et deux plans passant par l'origine, et étant respectivement l'un horizontal et l'autre vertical. Ces coordonnées sphériques permettent de situer dans l'espace chacun des points par rapport au capteur, travail préalable et nécessaire à la modélisation 3D. Chaque point 3D analysé $\mathbf{p_i}$ est associé à un rayon $\mathbf{ray_i}$, exprimé par les angles sphériques $\mathbf{ray_i} = (\varphi_i, \theta_i)$ ou par les trois coordonnées normalisées $\mathbf{ray_i} = (x_i/r_i, y_i/r_i, z_i/r_i)$. Le rayon désigne la demi-droite qui a pour origine la position du capteur 3D et qui passe par le point $p_i$. Dans le cas d'un capteur de type LIDAR, il s'agit du rayon laser qui scanne la scène en passant successivement par les différents points $p_i$ à la surface des éléments sur lesquels est réfléchi le rayon laser. Dans la suite, $\mathbf{Ray} = \mathbf{\{ray_i;}\ 0 \leq i < N\}$ est l'ensemble des N rayons lancés par le capteur 3D et qui sont associés aux N points $p_i$ respectifs. Sans sortir du cadre de l'invention, chaque point 3D $p_i$ peut être exprimé indifféremment par ses coordonnées cartésiennes ou sphériques. Les rayons Ray peuvent être directement produits par le capteur 3D (notamment lorsqu'il s'agit d'un capteur de type LIDAR) ou bien être calculés à partir des coordonnées des points $p_i$ et de la position du capteur ou de la distance entre le capteur et le point Pi.

La méthode selon l'invention reçoit par ailleurs en entrée un ensemble 102 de modèles géométriques associés à des classes d'objets. La conception de ces modèles géométriques ne fait pas partie de l'invention. Les modèles géométriques sont prédéterminés et stockés en mémoire, par exemple dans une base de données, pour être utilisés par l'invention. Les modèles peuvent dépendre de l'application visée et peuvent correspondre à différents types de représentations géométriques. Par exemple, les modèles géométriques 102 peuvent avoir des formes élémentaires en deux dimensions telles qu'un plan, un disque, un carré, un rectangle, un polygone ou encore un losange. Ils peuvent aussi avoir des formes élémentaires en trois dimensions telles qu'une sphère, un cube, une boite, un cylindre, un cône. Les modèles géométriques peuvent être des modèles complexes composés de plusieurs modèles élémentaires. Ils peuvent prendre la forme de maillages polygonaux, de surfaces implicites, paramétriques ou encore quadriques.

Un modèle géométrique peut être une seule représentation géométrique ou un composé de plusieurs représentations géométriques de différents types. Une classe d'objet peut être associée à plusieurs modèles géométriques. Par exemple, la classe voiture peut être associée à plusieurs maillages polygonaux représentant différentes marques et modèles de voitures.

Le choix des modèles géométriques dépend de la nature de la scène observée et les éventuels éléments qui la caractérisent. Par exemple, les modèles représentant des éléments d'une scène routière peuvent être :

- un polygone 2D pour le sol (route ou trottoir),
- un cylindre pour les poteaux,
- une boite 3D pour les murs et les bâtiments,
- un maillage polygonal pour les véhicules, les personnes et les animaux,
- un modèle composé d'une forme élémentaire 2D et d'une boite 3D pour les panneaux de signalisation routière.

Selon un mode de réalisation particulier de l'invention, pour mieux optimiser la mise en correspondance entre un segment et un modèle géométrique, le modèle géométrique est normalisé. En effet, un modèle 3D, est, a priori, conçu dans un repère et à une échelle arbitraires. Le but de la normalisation est de définir un repère naturel et une taille réelle intrinsèques au modèle géométrique 3D. Le processus de normalisation se décompose, par exemple, en trois phases :

- une première phase d'alignement ou de normalisation de l'orientation qui consiste à orienter le modèle dans sa pose naturelle selon la perception humaine. Cette première phase peut être réalisée en transformant le modèle dans un repère en utilisant le produit de deux matrices : la matrice de rotation fixée par les trois axes d'alignement donnés selon un ordre précis et la matrice de réflexion fixée par les sens de ces trois axes,
- une deuxième phase de centrage ou de normalisation de la position du modèle qui consiste à positionner le modèle par rapport à l'origine du repère. En d'autres termes, il s'agit de déplacer un centre particulier du modèle géométrique à l'origine de son repère,
- une troisième phase de mise à échelle ou de normalisation de la taille du modèle qui consiste à dimensionner le modèle selon sa taille réelle.

Ce processus de normalisation peut être effectué de façon manuelle, semi-automatique ou entièrement automatique tel qu'illustré, par exemple, dans la publication de référence [2].

On peut illustrer ce processus de normalisation pour un exemple concret d'un modèle géométrique constitué d'un maillage polygonal correspondant à une voiture.

En appliquant la première phase d'alignement, on détermine les trois axes d'alignement ordonnés et leurs sens. L'axe des z est la normale de l'axe de l'essieu arrière de la voiture qui est la normale du plan de symétrie du véhicule, le sens de cet axe étant du coté passager vers le coté conducteur. L'axe des y est la normale de l'axe reliant les milieux des deux essieux, le sens de cet axe étant de l'arrière de la voiture vers l'avant de la voiture. L'axe des z est le produit vectoriel de l'axe des x et l'axe des y, le sens de cet axe étant du bas de la voiture vers le haut de la voiture.

En appliquant la deuxième phase de centrage, on détermine le centre $(x_c, y_c, z_c)$ du modèle, où $(x_c, y_c)$ sont les deux premières coordonnées du point 3D, intersection de l'axe de l'essieu arrière et l'axe reliant les milieux des deux essieux et $z_c$ est donné par le plan bas circonscrit aux quatre roues.

En appliquant la troisième phase de mise à l'échelle, on détermine les facteurs d'échelle $(s_x, s_y, s_z)$ qui sont donnés par les ratios entre les trois dimensions de la boite englobant le modèle et les trois dimensions réelles de la voiture selon les axes x, y et z.

A partir de l'ensemble de points 3D acquis par le capteur 3D et des modèles géométriques prédéfinis, la méthode selon l'invention se décompose en trois phases principales : une première phase de segmentation 3D de la scène, une seconde phase de calcul des poses 3D candidates pour chaque segment et une troisième phase de calcul d'un modèle géométrique optimal et d'une pose optimale pour chaque segment.

Ainsi, un objectif de l'invention est de déterminer, pour chaque segment structurant de la scène, un modèle géométrique optimal, ainsi que la transformation optimale permettant de positionner le modèle géométrique dans la même pose que le segment. De cette manière, l'invention permet une reconnaissance des objets de la scène, à partir d'une seule prise de vue 3D, incluant une détection des objets et une classification des objets détectés par classes d'objets associés aux modèles géométriques.

On décrit à présent un exemple de réalisation de l'étape 103 de segmentation de la scène 3D observée et capturée par l'ensemble de points 3D acquis à l'étape 101.

La segmentation 3D consiste à associer un identifiant à chaque groupe de points 3D représentant une cohérence géométrique. Elle se fait généralement par agrégation selon une proximité spatiale de points 3D ou selon une similarité de descripteurs calculés sur les points 3D. La segmentation 3D ne permet pas la classification sémantique des points 3D mais uniquement la détection d'éléments présents dans la scène.

Des filtres peuvent être appliqués sur le nuage de points avant la segmentation 3D pour supprimer le bruit qui peut être d'origine naturelle comme la pluie, la poussière, l'éblouissement ou le bruit lié aux capteurs ou encore le bruit lié aux traitements d'acquisition.

Une scène 3D est le souvent composée de deux types d'éléments : les éléments supports et les éléments structurants. Les éléments supports supportent les éléments structurant et les éléments structurant reposent sur les éléments supports.

Par exemple lorsque la scène observée est une scène routière, les éléments supports sont les sols notamment les routes, les trottoirs ou les passages cyclables, et les éléments structurants sont les infrastructures, c'est à dire les bâtiments, les ponts, les murets, mais aussi les véhicules, les piétons, les arbres ou les poteaux.

Dans un autre exemple, lorsque la scène observée concerne un bâtiment, une maison ou une pièce, les éléments supports sont les structures solides qui forment le bâtiment et délimitent les pièces comme les sols, les murs, les cloisons et les plafonds, et les éléments structurants sont les portes, les fenêtres, les meubles, les tables, les chaises, les armoires et tout objet reposant ou étant fixé sur un élément support.

Dans encore un autre exemple si la scène observée est une scène composée de différents objets posés sur une table ou dans une étagère, dans ce cas, l'élément support est le ou les plateaux, et les éléments structurants sont les objets posés sur les éléments supports.

Les éléments de la scène structurants sont connectés entre eux par des éléments supports. Autrement dit, un élément structurant est toujours relié, posé sur ou connecté à un élément support.

L'étape de segmentation 103 de la scène 3D exploite la distinction entre les éléments supports et les éléments structurants pour segmenter séparément ces deux types d'éléments et ce, afin de faciliter la segmentation globale de la scène.

Les éléments supports sont le plus souvent représentés par des plans ou des polygones et les éléments structurants peuvent être représentés par des formes géométriques plus complexes. Cependant, les éléments structurants sont toujours liés à un élément support.

Par exemple, dans le cas d'une scène routière, les véhicules sont géométriquement liés par la route.

Si on arrive à identifier les points 3D associés à la route et à les filtrer du nuage de points 3D, il est ensuite plus facile de segmenter les véhicules comme des instances connexes.

Ainsi, selon un mode de réalisation particulier de l'invention, l'étape de segmentation 103 est mise en oeuvre en trois sous-étapes successives : une première sous-étape de segmentation des éléments supports de la scène, une deuxième sous-étape de suppression des points 3D appartenant à des éléments supports détectés puis une troisième sous-étape de segmentation des autres éléments de la scène : les éléments structurants.

La première sous-étape de segmentation des éléments supports de la scène est, par exemple, mise en oeuvre au moyen de l'algorithme décrit dans la référence [3].

La troisième sous-étape de segmentation des éléments structurants de la scène est, par exemple, mise en oeuvre par un technique dite de clustering 3D telle que décrite dans la référence [4].

Dans un mode de réalisation particulier de l'invention, l'étape de segmentation 103 peut débuter, au préalable, par une phase de filtrage du bruit impactant les points 3D.

Dans un autre mode de réalisation particulier de l'invention, l'étape de segmentation 103 peut aussi comprendre une étape de raffinement de la segmentation obtenue.

En sortie de l'étape de segmentation 103, on obtient un masque de segmentation permettant d'identifier les éléments supports et les éléments structurants dans la scène observée.

Les sorties de l'étape de segmentation 103 comprennent le nombre H de segments supports détectés, le nombre S de segments structurants détectés, un vecteur de correspondance de taille S indiquant pour chaque segment structurant, le segment support associé sur lequel il repose où avec lequel il est lié. L'étape de segmentation 103 fournit en outre un masque de segmentation qui comprend, pour chaque point 3D, l'identifiant du segment auquel il appartient. Le masque de segmentation peut aussi indiquer si le point 3D correspond à du bruit ou si il n'a pas été segmenté.

Dans le cas particulier où la scène ne comprend aucun élément support, la sous-étape de segmentation des éléments supports peut être rendue optionnelle.

Dans un autre cas particulier, si la scène est constituée d'un seul objet, alors l'étape de segmentation 103 peut être entièrement rendue optionnelle ou peut être limitée à une simple étape d'affectation d'un identifiant à l'unique objet identifié dans la scène.

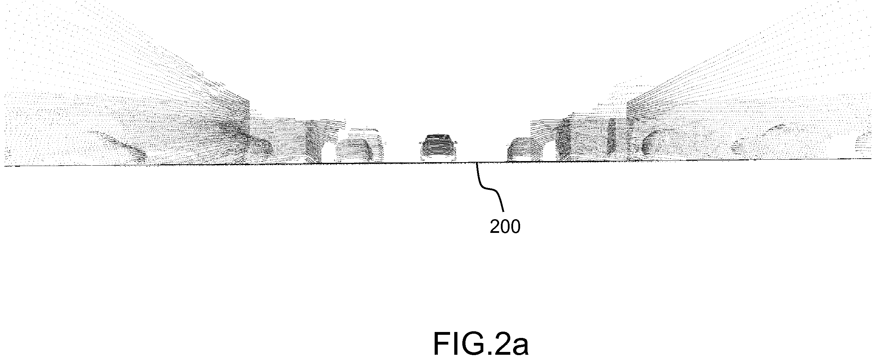

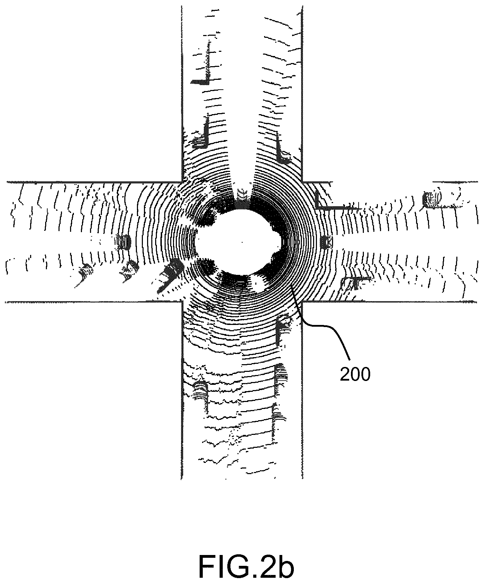

Les figures 2a et 2b représentent, respectivement en vue de droite et en vue de dessus, le résultat obtenu après segmentation des éléments supports d'une image 3D d'une scène d'une route. Ces deux figures représentent l'ensemble de points 3D capturés (selon deux points de vue différents) et en gras, les points correspondants aux segments détectés par la segmentation. Sur les figures 2a et 2b, seul le sol 200 est segmenté.

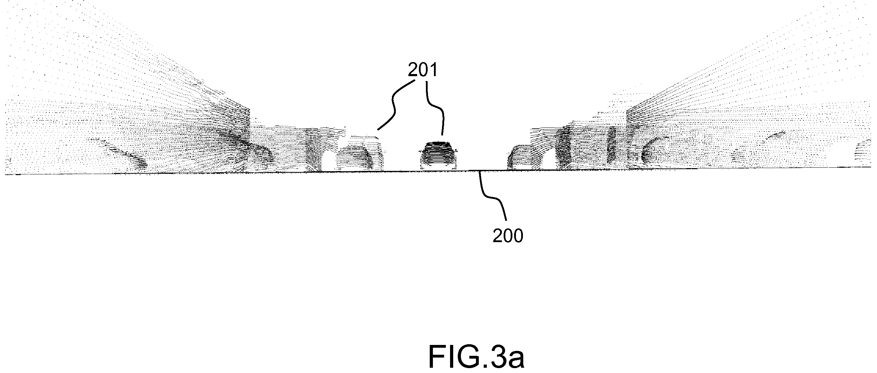

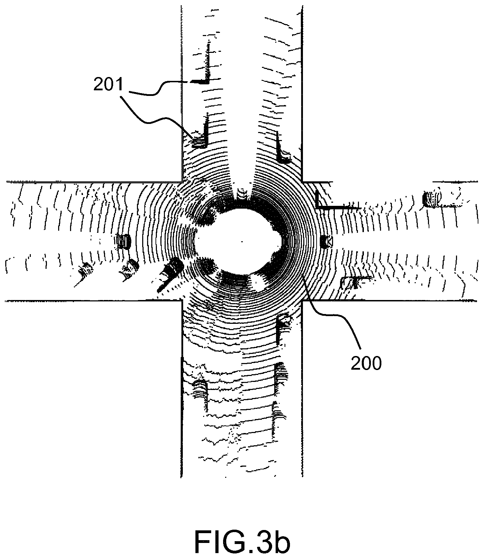

Les figures 3a et 3b représentent, respectivement en vue de droite et en vue de dessus, le résultat obtenu après segmentation des éléments structurants sur la même image 3D que celle des figures 2a et 2b. Sur ces figures 3a et 3b, les voitures 201 sont segmentées en tant qu'éléments structurants reposant sur l'élément support constitué par le sol 200.

On décrit à présent un exemple de réalisation de l'étape 104 de détermination des poses candidates. Cette étape consiste à déterminer un ensemble de poses candidates à appliquer à chaque modèle géométrique pour le transformer dans le repère 3D de la scène observée de sorte à le faire correspondre au mieux avec un segment détecté à l'étape 103.

On rappelle qu'une pose en trois dimensions d'un objet correspond au point de vue de cet objet pris par la caméra. Une pose 3D est définie par une transformation dans l'espace selon les six degrés de liberté, autrement dit par trois angles de rotation et les translations selon les trois axes du repère.

Dans un premier mode de réalisation, l'étape 104 consiste simplement à sélectionner toutes les poses qu'il est possible d'appliquer à chaque modèle géométrique pour le faire correspondre à chaque segment.

Cependant, cette solution implique un nombre d'opérations important par la suite car l'étape finale du procédé (qui sera décrit plus en détail par la suite) consiste, pour chaque segment, à déterminer un critère de mise en correspondance entre le segment et chaque modèle géométrique transformé selon chaque pose candidate. On voit donc que plus le nombre de poses candidates est élevé, plus le nombre d'opérations est important ce qui peut être pénalisant pour des applications qui doivent respecter le temps-réel.

Dans un second mode de réalisation, l'étape 104 consiste à sélectionner un nombre réduit de poses candidates en fonction de caractéristiques géométriques des modèles géométriques et/ou des segments.

Aligner et normaliser un modèle géométrique consiste à calculer une pose 3D intrinsèque au modèle et à ramener le modèle à sa taille réelle. Comme expliqué précédemment, ce processus de normalisation peut être manuel, semi-automatique ou entièrement automatique.

Supposons qu'un modèle géométrique représente correctement un segment s et que leurs poses initiales sont différentes. Un objectif de l'invention est de trouver la transformation RT correspondant aux six degrés de liberté à modifier (les trois angles de rotations et les translations selon les trois axes) sur le modèle pour estimer la pose du modèle géométrique dans le repère du segment.

Si il existe une pose intrinsèque au segment qui est la même que celle du modèle alors le problème de la pose optimale entre le segment et le modèle est résolu, la normalisation de la taille n'étant pas nécessaire car les points du segment reflètent des données réelles et le modèle est mis à sa taille réelle.

Cependant, il est difficile de trouver la pose intrinsèque d'un segment du fait des problèmes d'auto-occultation, d'occultation par d'autres éléments de la scène ou de limitation du champ de vision mais aussi du fait de la résolution et de la précision du capteur 3D qui sont limitées.

Pour résoudre ce problème, il est proposé, pour mettre en oeuvre l'étape 104, une méthode de sélection d'un ensemble réduit de poses 3D pertinentes pour faire correspondre un segment à un modèle géométrique. Un objectif de cette étape est de réduire au maximum l'espace des six degrés de liberté.

Pour cela, on part de l'hypothèse qu'un humain cherche généralement à observer un objet selon des axes particuliers, caractérisant des critères géométriques comme des symétries ou des plans principaux. Cette approche permet à la fois de trouver la pose la plus naturelle d'un objet et d'aligner deux objets visuellement similaires de la même manière. La méthode proposée consiste à déterminer des caractéristiques géométriques (sur le segment, sur un contexte local au segment ou sur un contexte global de la scène) qui permettent de déduire certaines informations permettant de limiter le nombre de degrés de libertés pour le calcul de la pose optimale du segment. Ces informations prennent aussi en compte le modèle géométrique que l'on cherche à faire correspondre avec le segment. Elles comprennent notamment :

- une, deux ou les trois coordonnées d'un centre intrinsèque du segment,
- un, deux ou les trois axes d'orientation du segment,
- l'ordre des axes, c-à-d, quel est l'axe des x ? quel est l'axe des y ? et quel est l'axe des z ?,
- les sens des axes.

Les caractéristiques géométriques calculées à partir du contexte local ou global de la scène peuvent notamment être déterminées lorsqu'un segment structurant est lié à au moins un segment support. Dans un tel cas de figure, la pose du segment support est liée à la pose du segment structurant. Ainsi, en connaissant la pose complète du segment support ou certains de ses degrés de liberté, il est possible de réduire le nombre d'hypothèses de poses possibles pour le segment structurant qui est rattaché au segment support.

Par exemple, les caractéristiques géométriques calculées à partir du contexte local ou global peuvent comprendre :

- la normale du plan du segment support associé au segment structurant qui donne un axe d'alignement du segment structurant
- la normale d'autres plans de segments supports

Les caractéristiques géométriques calculées directement sur un segment peuvent comprendre :

- les sommets d'une boite 3D englobant le segment,
- la normale d'un plan de symétrie de réflexion du segment,
- la direction d'une symétrie locale de translation du segment,
- la normale du plan dominant du segment,
- les axes principaux issus d'une analyse en composante principale.

Les caractéristiques géométriques peuvent changer d'une classe d'objets à une autre. Un travail préliminaire consiste à définir des caractéristiques géométriques pour chaque classe d'objet qu'on cherche à détecter dans la scène 3D. On rappelle que ces classes d'objets sont représentées par un ensemble de modèles géométriques qui constituent une entrée de la méthode. Connaissant la classe du modèle géométrique à mettre en correspondance avec le segment structurant, il est plus judicieux d'utiliser les caractéristiques les plus pertinentes pour cette classe.

Prenons l'exemple d'un nuage de points représentant une scène routière constituée seulement d'une voiture et d'une route, la voiture étant sur la route. Après l'étape de segmentation, la scène est décomposée en deux segments, un segment structurant et un segment support. Dans ce cas, le segment structurant correspond aux points 3D appartenant à la voiture et le segment support associé au segment structurant correspond aux points 3D appartenant à la route. Le modèle géométrique à mettre en correspondance avec le segment structurant est un maillage polygonal parmi une base de modèles 3D représentant différentes voitures.

En premier lieu, on peut utiliser certaines caractéristiques géométriques du segment support auquel le segment structurant est rattaché. Par exemple, en calculant la normale du plan de la route, deux angles de rotation et une translation selon l'axez sont déduits (trois degrés de libertés de moins).

Ensuite, on peut déterminer certaines caractéristiques géométriques du segment structurant. Comme on cherche à mettre en correspondance le segment structurant et le modèle géométrique, les caractéristiques géométriques sont prédéfinies au préalable selon la classe voiture. La classe voiture présente plusieurs caractéristiques géométriques comme la symétrie de réflexion, la symétrie locale de translation, deux plans principaux (le coté gauche et le coté droit), la boite 3D englobante et d'autres. Par exemple, on sait que les roues de la voiture doivent forcément être situées sur le sol, ce qui élimine certaines hypothèses de pose du modèle géométrique de la classe voiture.

Dans cet exemple, le plan dominant et la boite 3D englobante sont prédéfinis comme caractéristiques géométriques pour la classe voiture.

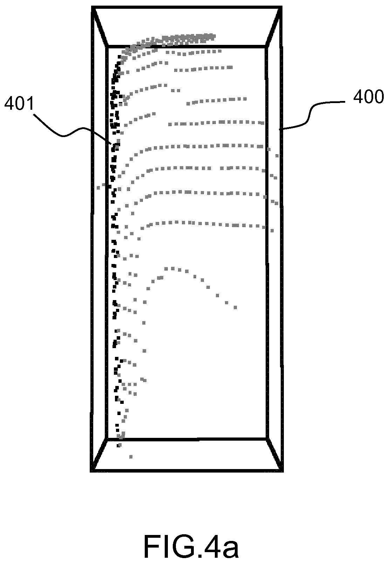

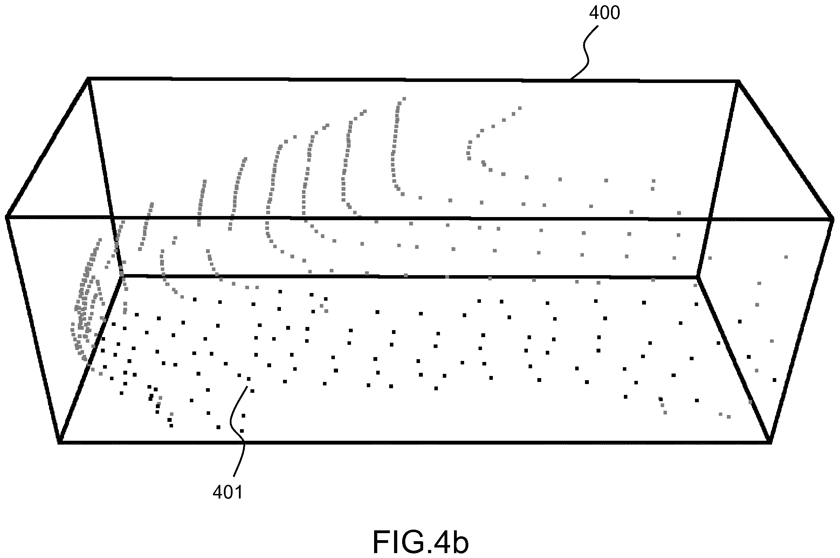

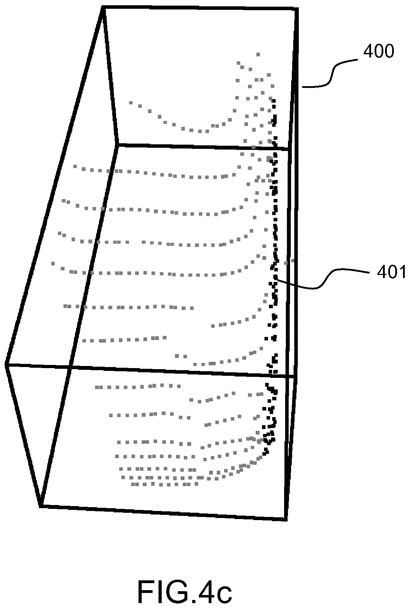

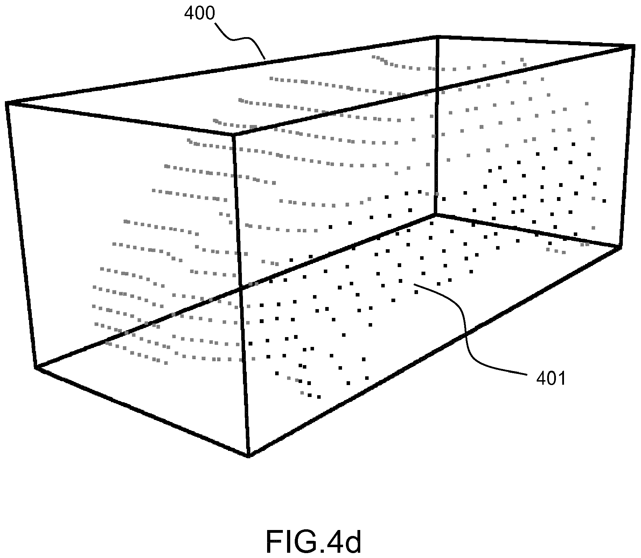

Cet exemple est illustré sur les figures 4a à 4d qui représentent, selon quatre points de vue différents, un segment extrait de la segmentation obtenue sur les figures 3a et 3b. Le segment représenté correspond à une voiture. Sur les figures 4a à 4d, on a représenté la boite englobante 400 du segment ainsi que son plan dominant 401. Le plan dominant 401 est le plan du segment qui contient le plus de points.

Comme expliqué ci-dessus, on sait que la boite englobante doit reposer sur le sol qui a déjà été segmenté en tant qu'élément support. On sait aussi que le plan dominant 401 est parallèle au sol pour un élément appartenant à la classe d'objets des voitures. Ces caractéristiques géométriques permettent ainsi de fixer les trois degrés de liberté en rotation ainsi qu'un degré de liberté en translation (selon l'axe perpendiculaire au plan dominant). Il ne reste donc plus que des translations selon deux axes dans le plan parallèle au plan dominant.

Cette première étape permet donc de limiter le nombre de poses candidates à 16.

En calculant la normale du plan dominant sur le segment structurant détecté, le troisième angle est déduit. A ce niveau, l'axe des z orienté et les deux autres directions sont bien identifiés. L'ambiguïté de rotation réside alors sur l'ordre et les sens des axes des x et des y.

Ainsi, en prenant en compte les caractéristiques géométriques du segment et du modèle géométrique, on arrive à diminuer le nombre d'hypothèses de poses pertinentes à appliquer au modèle géométrique pour le faire correspondre au segment.

En effet, le nombre de configurations de rotation peut être limité à quatre hypothèses. Quant à la translation, elle se réduit à une translation 2D sur le plan (x, y). Ainsi, le nombre de configurations de translation peut aussi être limité à quatre hypothèses en moyennant les sommets des boites 2D du segment et du modèle après projection sur le plan (x, y). Pour cet exemple, seize poses candidates sont ainsi retenues correspondant à quatre configurations de rotation et quatre configurations de translation.

De façon générale, l'étape 104 peut être mise en oeuvre de la façon suivante. En premier lieu, on prédéfini préalablement des caractéristiques géométriques pour chaque classe d'objet que l'on cherche à détecter dans la scène 3D. Ensuite, pour chaque segment structurant, on analyse les caractéristiques géométriques prédéfinies pour la classe du modèle géométrique qu'on cherche à mettre en correspondance avec le segment structurant. Cette analyse est faite soit intrinsèquement sur le segment structurant, soit par rapport au contexte de la scène ou aux caractéristiques géométriques d'un segment support auquel le segment structurant est rattaché. Par exemple, les contraintes liées aux orientations déjà déterminées du segment support, permettent de limiter le nombre de poses possibles pour le segment structurant rattaché à ce segment support. De même, les caractéristiques géométriques de la classe d'objet considérée pour le modèle géométrique permettant aussi de limiter le nombre de poses possibles pour le segment structurant car le modèle géométrique présente certaines contraintes de symétrie, rotation ou translation.

Cette analyse permet de réduire considérablement les hypothèses de pose à appliquer au modèle géométrique qui doit correspondre au segment structurant. Par exemple, si on a préalablement déterminé la pose optimale du segment support, on peut en déduire un nombre limité de poses candidates pour le segment structurant associé.

On décrit à présent la dernière phase de l'invention qui concerne la recherche de la pose optimale et du modèle géométrique optimal à mettre en correspondance avec chaque segment détecté à l'étape 103.

Cette phase est réalisée pour chaque segment détecté, pour chaque modèle géométrique candidat et pour chaque hypothèse de pose parmi les poses retenues à l'issue de l'étape 104. Les modèles géométriques candidats peuvent être présélectionnés en fonction de l'application et de la connaissance a priori du contenu de la scène. Par exemple, pour une application de véhicule autonome, on sait que la scène est une prise de vue depuis une voiture, on peut alors limiter les modèles géométriques candidats à des classes de modèles dédiées à ce type de scènes.

Cette dernière phase se décompose en plusieurs étapes, une étape 105 d'incrustation du modèle géométrique dans la scène observée, selon la pose candidate et en tenant compte des occultations du segment, une étape 106 de calcul d'un score de mise en correspondance entre le modèle géométrique incrusté et le segment, ces deux étapes sont itérées pour tous les segments, tous les modèles candidats et toutes les poses candidates. Enfin, pour chaque segment, on recherche 107 un score optimal et on retient 108 le modèle géométrique et la pose associés pour identifier et reconnaitre le segment.

L'étape 105 d'incrustation du modèle géométrique dans la scène observée consiste à appliquer la pose candidate au modèle géométrique pour modifier son orientation et sa position dans le repère lié à la caméra. La pose candidate peut être représentée par une matrice de projection $\mathbf{RT}_{k,m}^{s}$ où s est l'indice du segment, k est l'indice de la pose candidate et m est l'indice du modèle géométrique. Le modèle géométrique est désigné par une représentation surfacique $G_m$. Le modèle géométrique transformé pour être incrusté dans la scène est désigné par $\mathbf{G}_{k,m}^{s}$. L'opération réalisée à l'étape 105 consiste à appliquer la matrice de projection au modèle géométrique et peut être formulée à l'aide de la relation suivante :

$$\mathbf{G}_{k,m}^{s} = \mathbf{RT}_{k,m}^{s} * \mathbf{G}_m$$

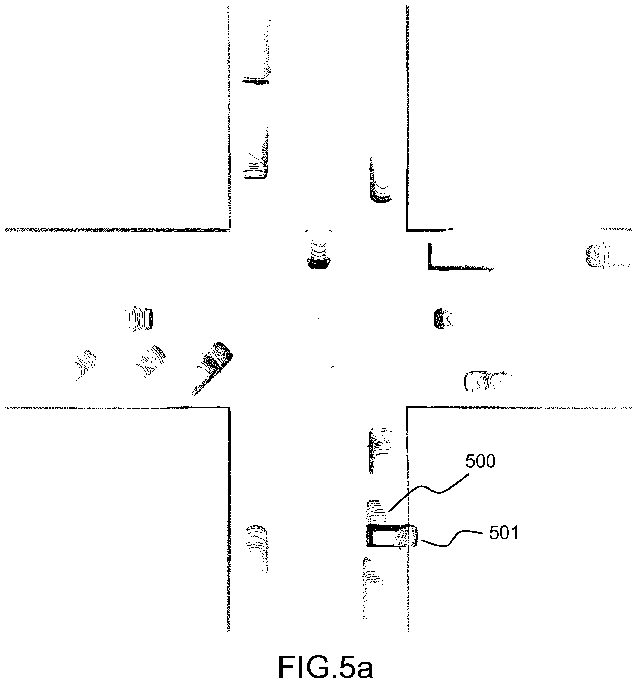

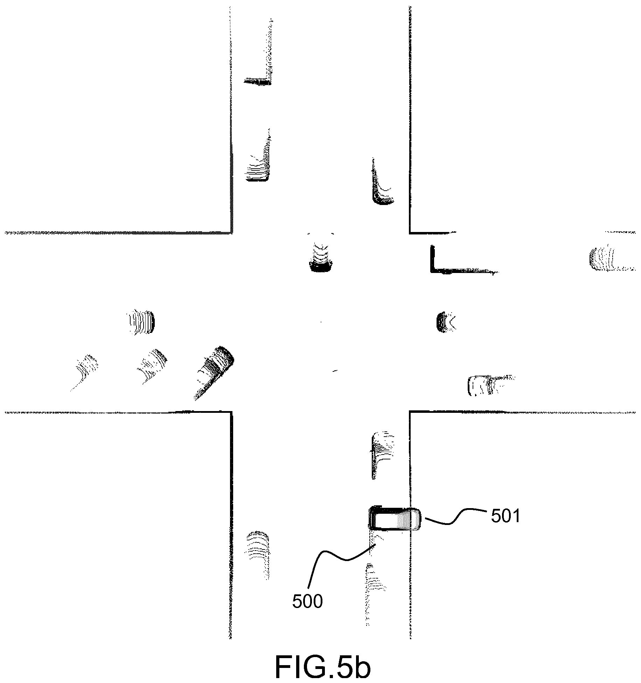

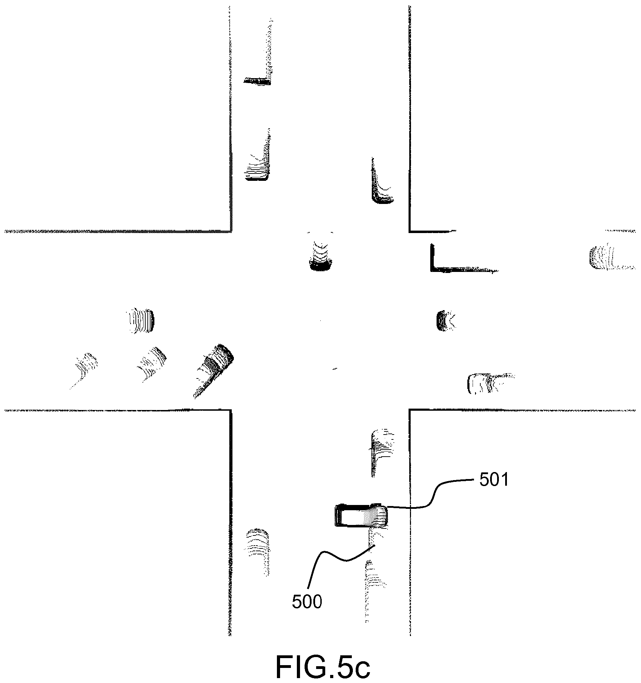

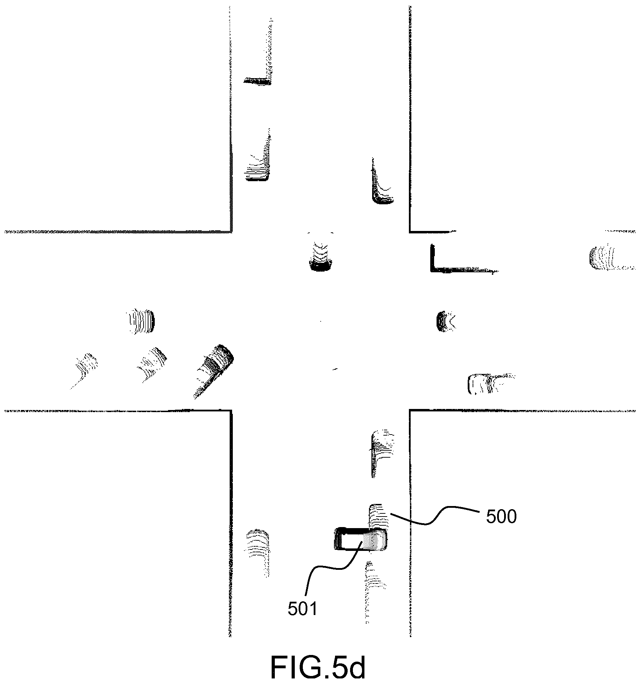

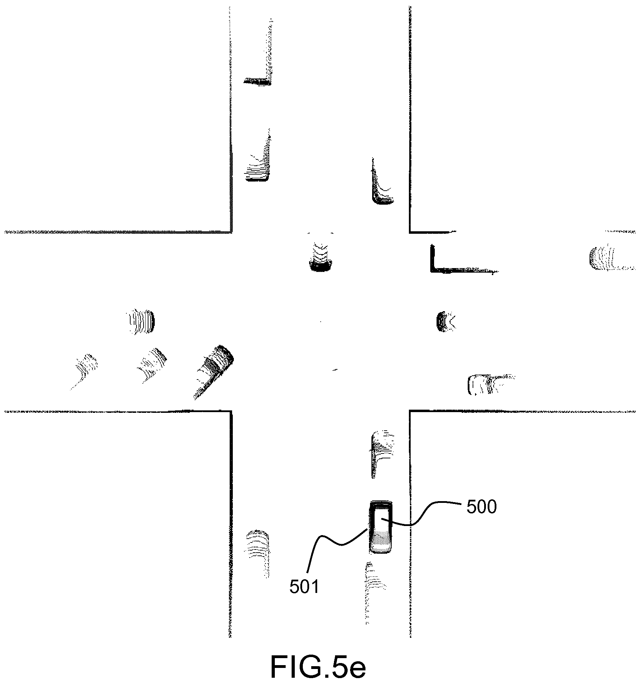

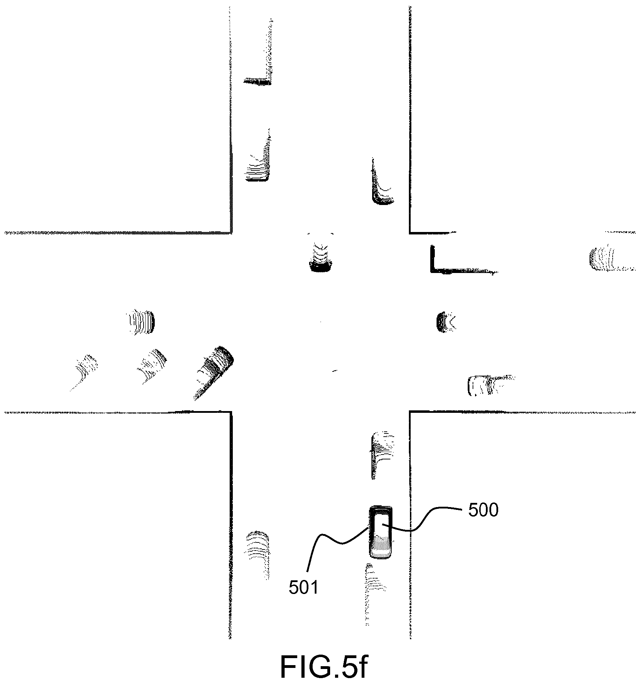

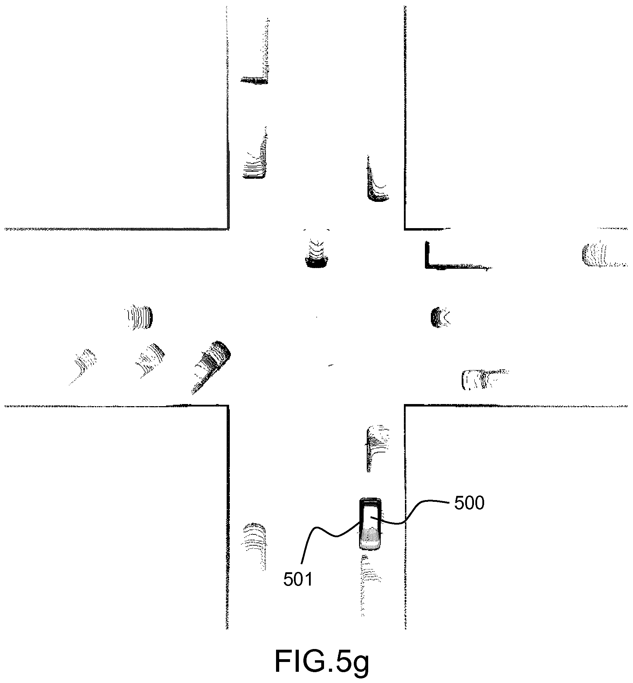

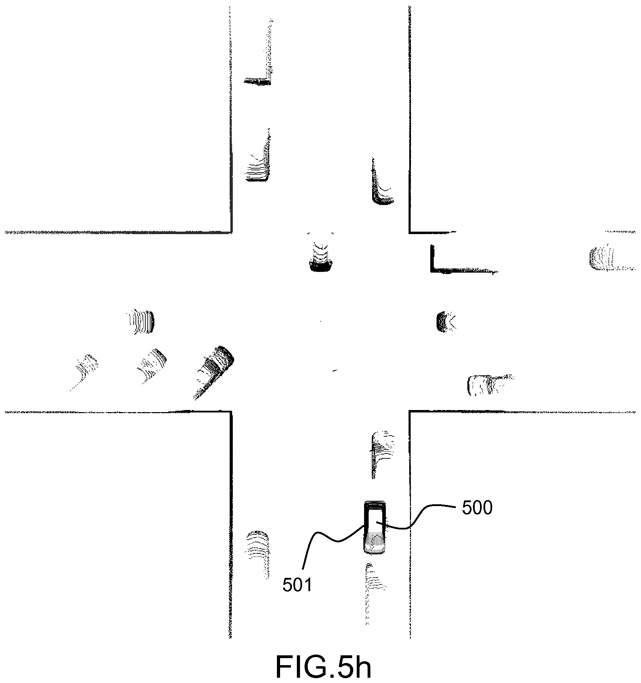

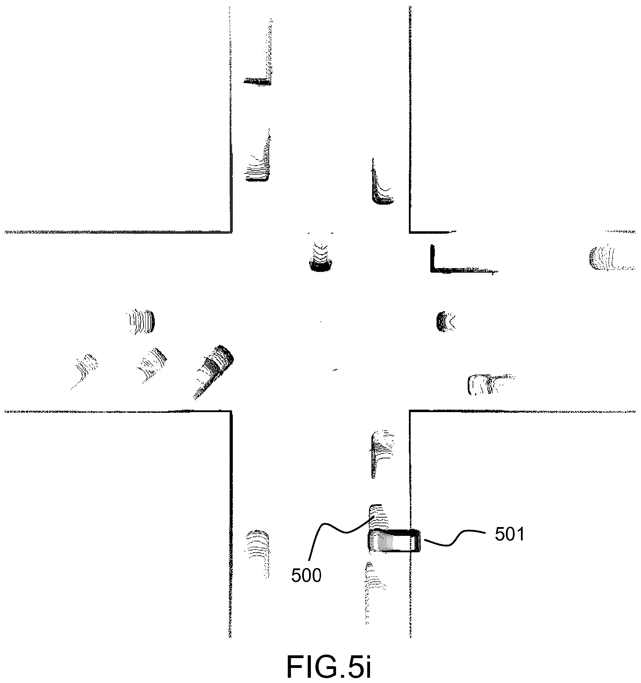

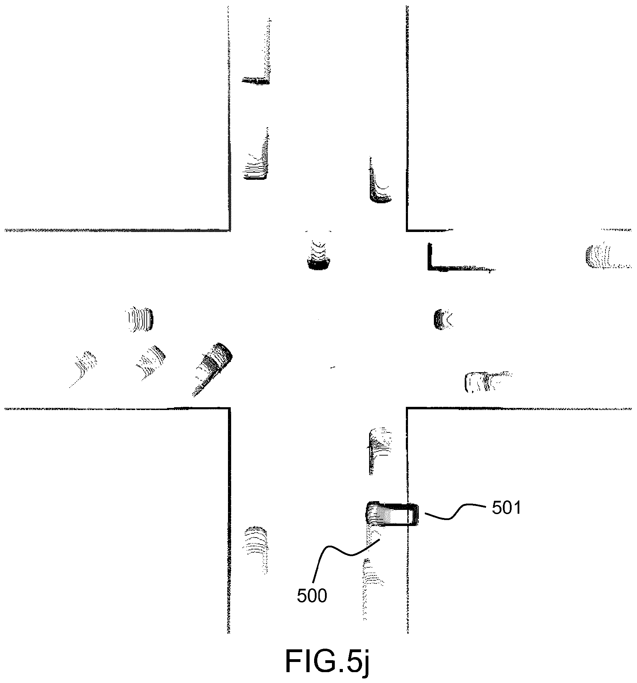

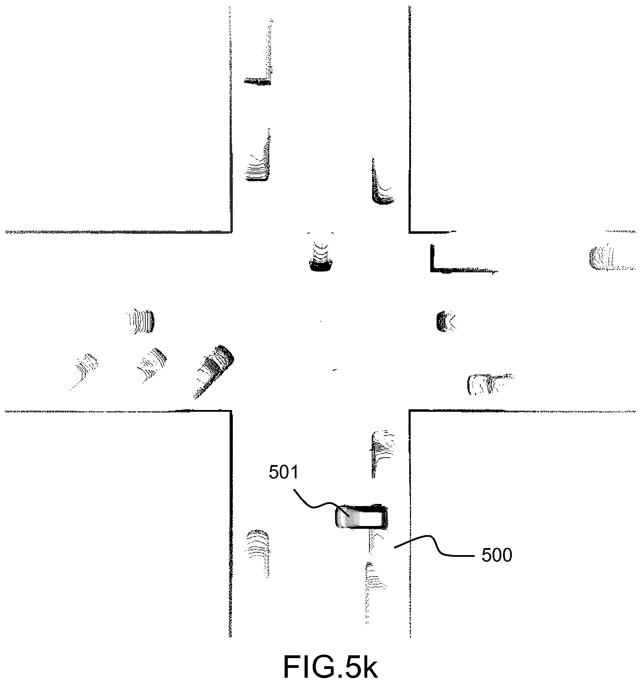

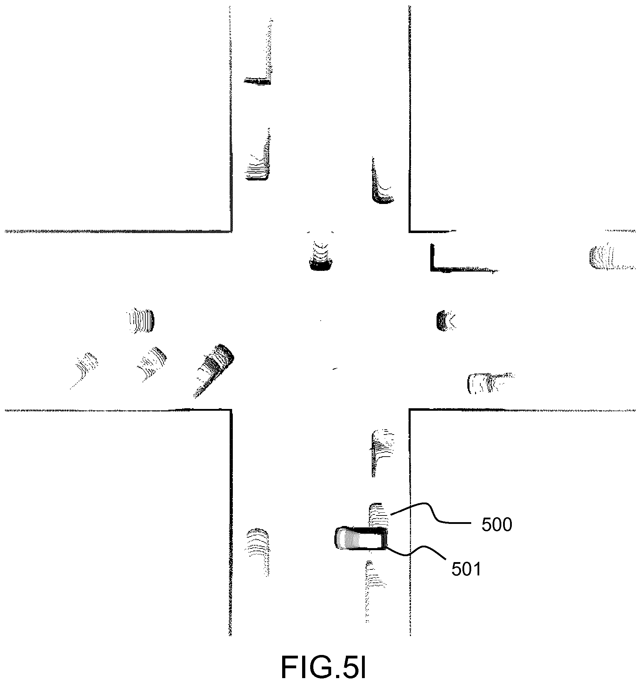

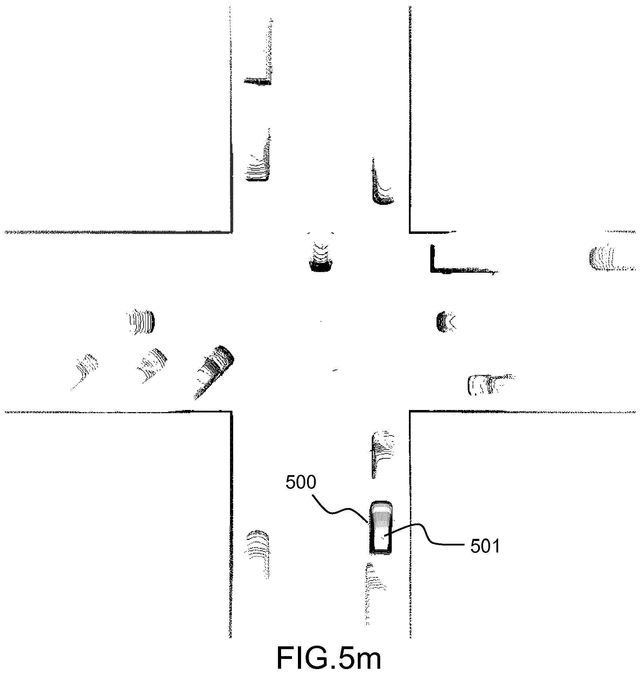

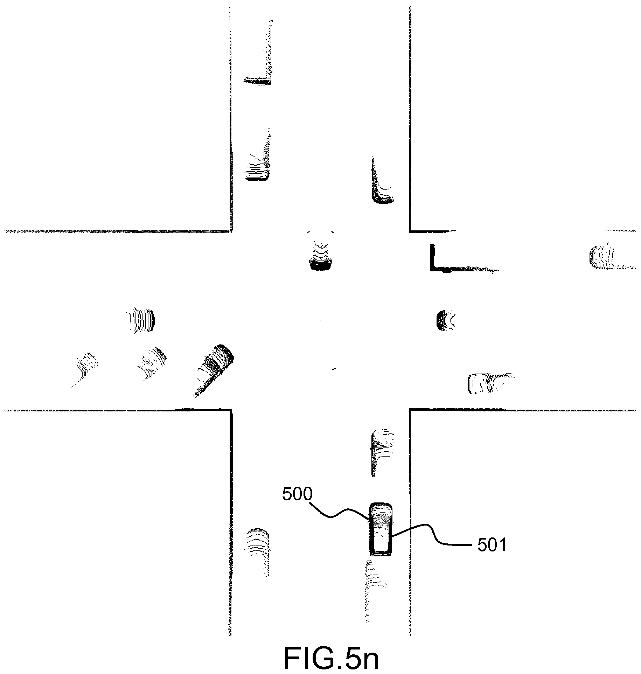

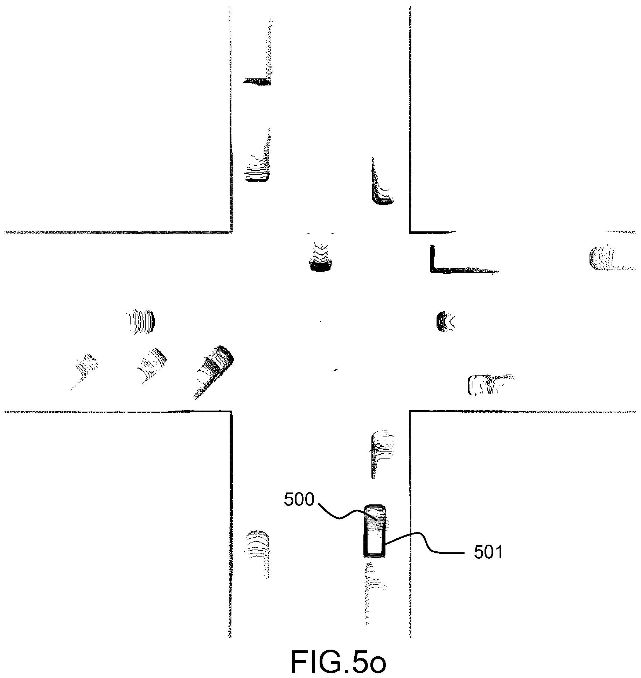

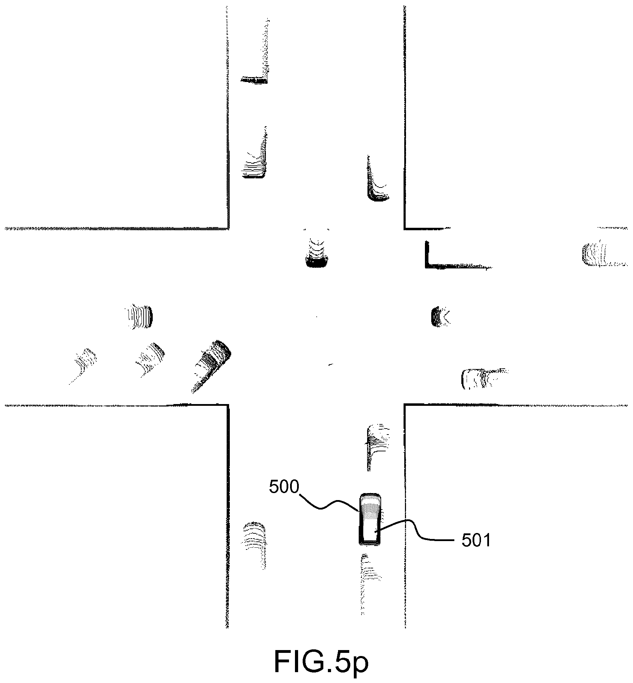

Les figures 5a à 5p représentent l'incrustation d'un modèle géométrique issue de la classe des modèles de voitures, dans la scène 3D segmentée sur les figures 3a et 3b. Le modèle 501 est incrusté sur un segment 500 selon 16 poses candidates différentes qui ont été retenues après prise en compte des caractéristiques géométriques du segment, du sol (segment support) et de la classe d'objets correspondant aux voitures. La limitation du nombre de poses candidates à un nombre égal à 16 a été expliqué précédemment sur l'exemple des figures 4a-4d.

Les seize poses candidates correspondent aux différentes orientations possibles du modèle dans le plan parallèle au sol et au plan dominant du segment 500, en alignant à chaque fois le modèle géométrique 501 sur un des quatre coins supérieurs de la boite englobante du segment 500.

L'étape 106 consiste à déterminer un score de mise en correspondance entre le modèle géométrique incrusté dans la scène à l'étape 105 et le segment. Pour prendre en compte les phénomènes d'occultation, d'auto-occultation et de limitation du champ de vision de la caméra, le score déterminé à l'étape 106 dépend d'un ou plusieurs critères de proximité ou d'éloignement entre différents éléments de la scène et le modèle géométrique incrusté.

Pour cela, l'étape 106 comprend deux sous-étapes.

Dans une première sous-étape, on détermine au moins un ensemble de points 3D parmi quatre ensembles de points caractéristiques d'une mise en correspondance correcte entre le modèle incrusté et le segment.

Dans une seconde sous-étape, on détermine, pour chaque ensemble de points déterminé à la première sous-étape, un score de mise en correspondance.

Le score final de mise en correspondance peut être pris égal à l'un des scores calculé pour l'un des ensembles de points ou à une combinaison linéaire de plusieurs scores calculés pour différents ensembles de points.

Un premier ensemble de points est constitué des points d'intersection entre le modèle géométrique incrusté et les rayons associés aux points du segment. Lors de l'acquisition des points 3D de la scène, le capteur 3D restitue les coordonnées de chaque point 3D ainsi que le rayon associé. Ainsi, il est possible de tracer les rayons qui partent de l'origine du repère du capteur et passent par les points 3D. On peut ainsi déterminer l'intersection entre ces rayons et le modèle géométrique incrusté. On note ce premier ensemble $\mathbf{R}_{k,m}^{s}$.

Pour ce premier ensemble de points 3D, le critère de correspondance entre le segment et le modèle incrusté est un critère de proximité entre le premier ensemble de points 3D et le segment. En effet, plus les points du premier ensemble sont proches des points du segment, plus cela signifie que le modèle géométrique incrusté est proche du segment et positionné selon une pose optimale.

Le score de mise en correspondance calculé sur la base de ce premier ensemble est une première fonction $f_1$ qui dépend de la proximité entre le premier ensemble de points 3D et le segment. Selon la fonction utilisée, la maximisation ou la minimisation de la fonction intervient pour une correspondance optimale entre le modèle incrusté et le segment.

Par exemple, pour déterminer la première fonction $f_1$, on détermine au préalable, pour chaque rayon, la distance entre le point du segment et le point du premier ensemble situés sur ce rayon. Les points du premier ensemble pour lesquels cette distance est inférieure ou égale à un seuil prédéterminé $s_p$ sont placés dans un premier sous-ensemble $\mathbf{M}_{k,m}^{s}$. Selon un premier exemple, la fonction $f_1$ est une fonction constante prise égale au cardinal du premier sous-ensemble $\mathbf{M}_{k,m}^{s}$. Selon un second exemple, la fonction $f_1$ est prise égale à la somme des distances calculées ci-dessus pour l'ensemble des rayons associés aux points du segment s. Dans le premier exemple, la fonction atteint un maximum pour une correspondance optimale entre le modèle incrusté et le segment. Dans le second exemple, la fonction atteint un minimum pour une correspondance optimale entre le modèle incrusté et le segment. Toute autre fonction permettant d'obtenir les mêmes propriétés peut être envisagée.

Dans un mode de réalisation particulier de l'invention, les points du premier ensemble pour lesquels la distance calculée est supérieure au seuil prédéterminé $s_p$ sont placés dans un second sous-ensemble $\mathbf{N}_{k,m}^{s}$. Ce second sous-ensemble correspond à des points du modèle qui sont situés sur les mêmes rayons que les points du segment mais à une distance éloignée.

Un autre score de mise en correspondance est calculé sur la base de ce second sous-ensemble. Ce second score est une seconde fonction $f_2$ qui dépend de l'éloignement entre le second sous-ensemble de points 3D et le segment. Selon la fonction utilisée, la maximisation ou la minimisation de la fonction intervient pour une correspondance optimale entre le modèle incrusté et le segment.

Selon un premier exemple, la fonction $f_2$ est une fonction constante prise égale au cardinal du second sous-ensemble $\mathbf{N}_{k,m}^{s}$. Selon un second exemple, la fonction $f_2$ est prise égale à la somme des distances calculées ci-dessus pour l'ensemble des rayons associés aux points du segment s. Dans le premier exemple, la fonction $f_2$ atteint un minimum pour une correspondance optimale entre le modèle incrusté et le segment. Dans le second exemple, la fonction atteint un minimum pour une correspondance optimale entre le modèle incrusté et le segment. Toute autre fonction permettant d'obtenir les mêmes propriétés peut être envisagée.

Un deuxième ensemble de points 3D est constitué des points du segment pour lesquels les rayons associés n'intersectent pas le modèle géométrique incrusté. On note ce deuxième ensemble $\mathbf{V}_{k,m}^{s}$.

Pour ce deuxième ensemble de points 3D, le critère de correspondance entre le segment et le modèle incrusté est un critère d'éloignement entre le deuxième ensemble de points 3D et le modèle géométrique incrusté. En effet, plus les points du deuxième ensemble sont peu nombreux et éloignés des points du modèle géométrique incrusté, plus cela signifie que le modèle géométrique incrusté est proche du segment et positionné selon une pose optimale.

Le score de mise en correspondance calculé sur la base de ce deuxième ensemble est une troisième fonction $f_3$

qui dépend de l'éloignement entre le deuxième ensemble de points 3D et le modèle géométrique incrusté. Selon la fonction utilisée, la maximisation ou la minimisation de la fonction intervient pour une correspondance optimale entre le modèle incrusté et le segment.

Selon un premier exemple, la troisième fonction $f_3$ est une fonction constante prise égale au cardinal du deuxième ensemble $V_{k,m}^s$. Selon un second exemple, la fonction $f_3$ est prise égale à la somme des distances minimales entre chaque point du deuxième ensemble et l'ensemble des points du modèle géométrique incrusté. Dans le premier exemple, la fonction $f_3$ atteint un minimum pour une correspondance optimale entre le modèle incrusté et le segment. Dans le second exemple, la fonction $f_3$ atteint un minimum pour une correspondance optimale entre le modèle incrusté et le segment. Toute autre fonction permettant d'obtenir les mêmes propriétés peut être envisagée.

Un troisième ensemble est constitué des points d'intersection entre le modèle géométrique incrusté et les rayons des points de la scène hormis le segment s. Autrement dit, on recherche ici l'intersection entre les rayons autres que ceux utilisés pour déterminer le premier et le deuxième ensemble de points et le modèle géométrique incrusté. On note ce troisième ensemble $\overline{N_{k,m}^s}$.

Pour ce troisième ensemble de points 3D, le critère de correspondance entre le segment et le modèle incrusté est un critère d'éloignement entre le troisième ensemble de points 3D et le segment. En effet, plus les points du troisième ensemble sont éloignés des points du segment, plus cela signifie que le modèle géométrique incrusté est éloigné des points de la scène hormis le segment s et en conséquence, il est proche du segment et positionné selon une pose optimale.

Le score de mise en correspondance calculé sur la base de ce troisième ensemble est une quatrième fonction $f_4$ qui dépend de l'éloignement entre le troisième ensemble de points 3D et le segment s. Selon la fonction utilisée, la maximisation ou la minimisation de la fonction intervient pour une correspondance optimale entre le modèle incrusté et le segment.

Selon un premier exemple, la quatrième fonction $f_4$ est une fonction constante prise égale au cardinal du troisième ensemble $\overline{N_{k,m}^s}$. Selon un second exemple, la fonction $f_4$ est prise égale à la somme des distances minimales entre chaque point du troisième ensemble et l'ensemble des points du segment s. Dans le premier exemple, la fonction $f_4$ atteint un minimum pour une correspondance optimale entre le modèle incrusté et le segment. Dans le second exemple, la fonction $f_4$ atteint un minimum pour une correspondance optimale entre le modèle incrusté et le segment. Toute autre fonction permettant d'obtenir les mêmes propriétés peut être envisagée.

Enfin, un quatrième ensemble de points est constitué des points de la scène hormis ceux du segment s dont les rayons n'intersectent pas le modèle géométrique incrusté. On note ce quatrième ensemble $\overline{M_{k,m}^s}$.

Pour ce quatrième ensemble de points 3D, le critère de correspondance entre le segment et le modèle incrusté est un critère de proximité entre le quatrième ensemble de points 3D et les points de la scène autres que ceux appartenant au segment s. En effet, plus les points du quatrième ensemble sont proches des points de la scène, plus ils sont éloignés des points du segment s et plus cela signifie que le modèle géométrique incrusté est éloigné des points de la scène hormis le segment s et en conséquence, il est proche du segment et positionné selon une pose optimale.

Le score de mise en correspondance calculé sur la base de ce troisième ensemble est une cinquième fonction $f_5$ qui dépend de la proximité entre le quatrième ensemble de points 3D et les points de la scène hormis le segment s. Selon la fonction utilisée, la maximisation ou la minimisation de la fonction intervient pour une correspondance optimale entre le modèle incrusté et le segment.

Selon un exemple, la cinquième fonction $f_5$ est une fonction constante prise égale au cardinal du troisième ensemble $\overline{M_{k,m}^s}$. Dans cet exemple, la fonction $f_5$ atteint un maximum pour une correspondance optimale entre le modèle incrusté et le segment.

Le score de mise en correspondance calculé à l'étape 106 peut être égal à l'un des scores calculés pour l'un des ensembles de points définis ci-dessus ou il peut être égal à une combinaison linéaire de plusieurs de ces scores.

Par exemple, le score de mise en correspondance peut être donné par la relation suivante :

$$\text{score}\left(\mathbf{P^s}, \mathbf{G_{k,m}^s}\right) = -\,w_1 * f_1 + \,w_2 * f_2 + w_3 * f_3 + \,w_4 * f_4 - w_5 * f_5\,.$$

$P^s$ désigne l'ensemble des points du segment s.

$w_1, w_2, w_3, w_4, w_5$ sont des coefficients de pondération prédéterminés de manière à accorder plus ou moins de poids à chaque fonction $f_i$ selon la confiance qu'on accorde à chaque critère.

Les coefficients de pondération appliqués aux fonctions $f_1$ et $f_5$ sont de signes opposés aux coefficients de pondération appliqués aux fonctions $f_2, f_3, f_4$ pour prendre en compte le sens de l'optimisation de chaque fonction. En effet, comme indiqué dans les exemples donnés ci-dessus, une correspondance optimale entre le modèle incrusté et le segment est obtenue pour une maximisation des fonctions $f_1$ et $f_5$ et une minimisation des fonctions $f_2,f_3,f_4$.

Sans sortir du cadre de l'invention, les valeurs et les signes des coefficients de pondération sont adaptés en fonction des fonctions précises choisies pour traduire chaque critère de proximité ou d'éloignement.

Dans un premier exemple de réalisation, le score de mise en correspondance est donné par la relation :

$$score\left(\mathbf{P^s}, \mathbf{G_{k,m}^s}\right) = -\,\mathbf{w_1} * \mathbf{card}\left(\mathbf{M_{k,m}^s}\right) + \mathbf{w_2} * \mathbf{card}\left(\mathbf{N_{k,m}^s}\right) + \mathbf{w_3} * \mathbf{card}\left(\mathbf{V_{k,m}^s}\right)$$
$$+\,\mathbf{w_4} * \mathbf{card}\left(\overline{\mathbf{N_{k,m}^s}}\right) \,-\, \mathbf{w_5} * \mathbf{card}\left(\overline{\mathbf{M_{k,m}^s}}\right).$$

où card() désigne la fonction cardinal.

Dans un autre exemple de réalisation, le score de mise en correspondance est donné par la relation :

$$score\left(\mathbf{P^s}, \mathbf{G_{k,m}^s}\right) = -\,w_1 * \sum_{q_i \in M_{k,m}^s} d_1(q_i, p_i) + w_2 * \sum_{q_i \in N_{k,m}^s} d_2(q_i, p_i) + w_3 * \sum_{q_i \in V_{k,m}^s} d_3(q_i)$$
$$+\,w_4 * \sum_{q_i \in \overline{N_{k,m}^s}} d_4(q_i) \,-\, w_5 * \sum_{q_i \in \overline{M_{k,m}^s}} d_5(q_i).$$

Avec

$$\mathbf{d_1(q_i, p_i)} \,=\, \mathbf{1} - \frac{\left|\mathbf{r_i^g} - \mathbf{r_i}\right|}{\mathbf{S_p}}$$

$$\mathbf{d_2(q_i, p_i)} \,=\, \frac{\left|\mathbf{r_i^g} - \mathbf{r_i}\right|}{\mathbf{S_p}} - \mathbf{1}$$

$r_i$ et $\mathbf{r_i^g}$ sont les distances respectives entre l'origine du repère et les points respectifs du segment s et du premier sous-ensemble $\mathbf{M_{k,m}^s}$ (pour $d_1$) ou du second sous-ensemble $\mathbf{N_{k,m}^s}$ (pour $d_2$).

$|,|$ est la norme $L_1$ ou la norme $L_2$ ou toute autre fonction permettant de calculer une distance entre deux points. $d_3,d_4,d_5$ correspondent respectivement aux fonctions $f_3,f_4,f_5$ données dans le second exemple de réalisation de ces fonctions pour chaque ensemble de points associé.

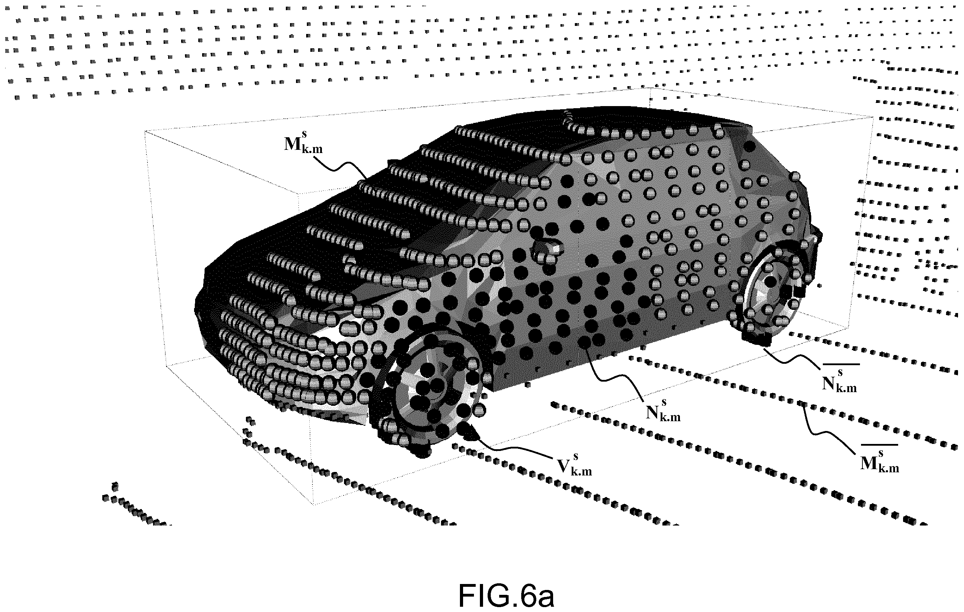

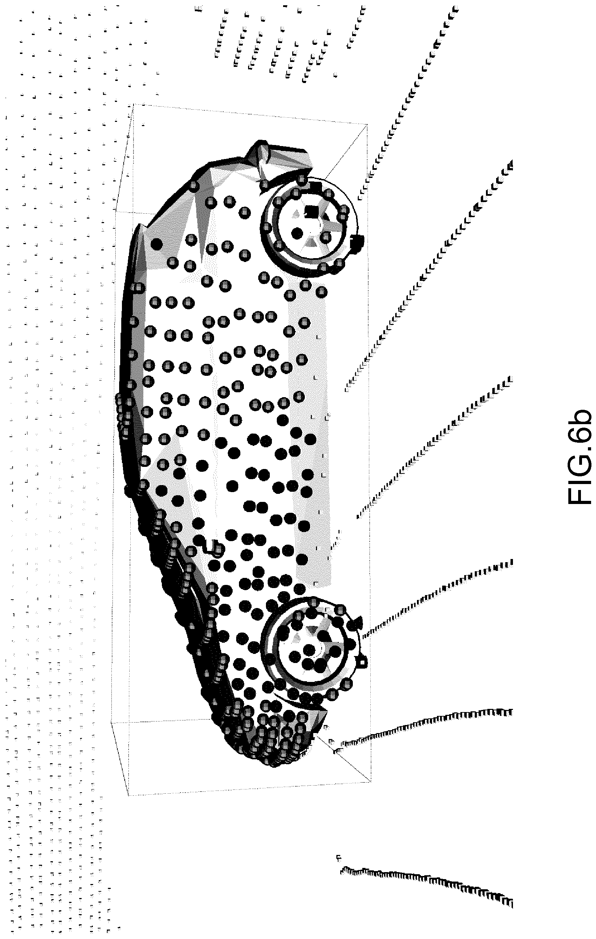

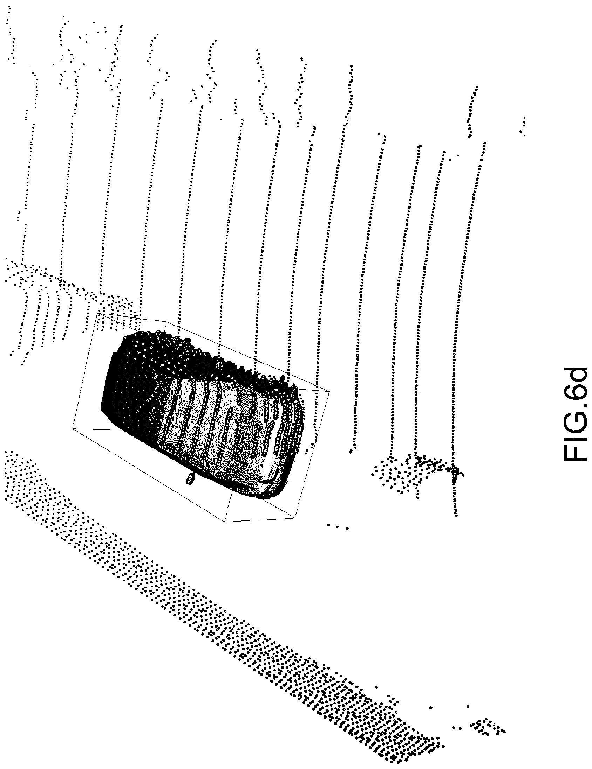

Les figures 6a à 6d représentent, selon quatre points de vue différents, la détermination des ensembles de points $\mathbf{M_{k,m}^s}$, $\mathbf{N_{k,m}^s}$, $\mathbf{V_{k,m}^s}$, $\overline{\mathbf{N_{k,m}^s}}$, $\overline{\mathbf{M_{k,m}^s}}$, sur un exemple de mise en correspondance d'un modèle géométrique de voiture avec un segment correspondant, le modèle étant positionné sur le segment avec une pose optimale.

Sur les quatre figures 6a à 6d, l'ensemble de points $\mathbf{M_{k,m}^s}$ est représenté par des sphères grises, l'ensemble de points $\mathbf{N_{k,m}^s}$ est représenté par des sphères noires, l'ensemble de points $\mathbf{V_{k,m}^s}$ est représenté par des cônes, l'ensemble de points $\overline{\mathbf{N_{k,m}^s}}$ est représenté par des cylindres et l'ensemble de points $\overline{\mathbf{M_{k,m}^s}}$ est représenté par des cubes.

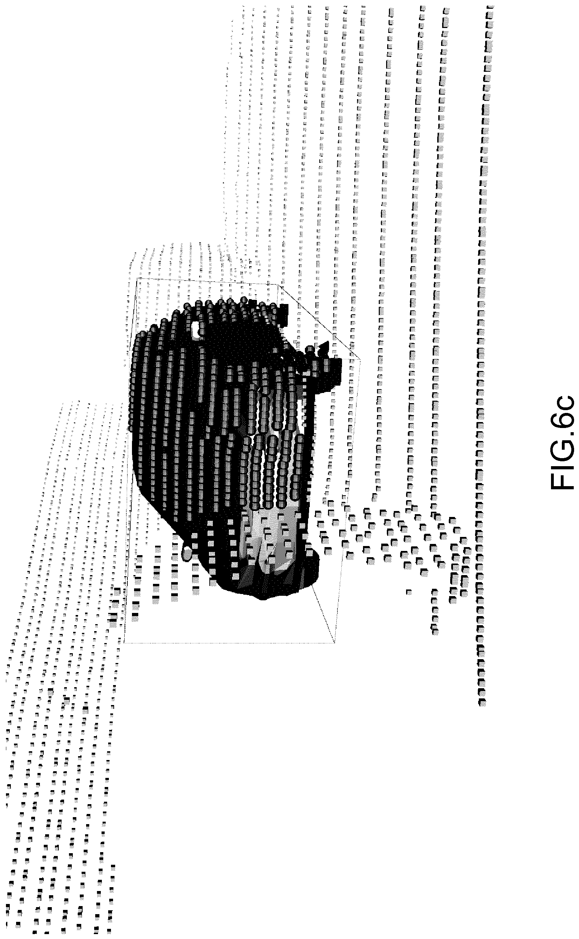

On peut voir, notamment sur la figure 6c, apparaitre une occultation par un autre objet de la scène.

Lorsque tous les scores de mise en correspondance ont été calculés pour l'ensemble des modèles géométriques et des poses candidats, on détermine, dans une étape 107, le score optimal qui peut être, selon les fonctions choisies, le score maximal ou le score minimal parmi l'ensemble des scores calculés.

Dans une étape 108, on retient le modèle géométrique et la pose associés au score optimal, le segment s est alors reconstruit et identifié.

L'algorithme est poursuivi pour l'ensemble des segments détectés à l'étape de segmentation 103.

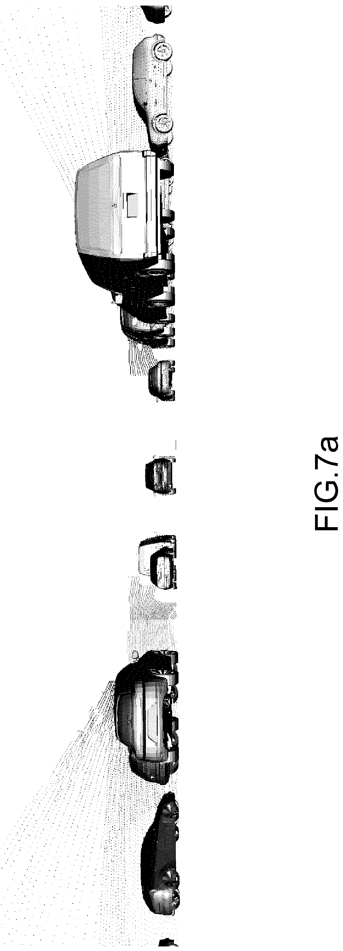

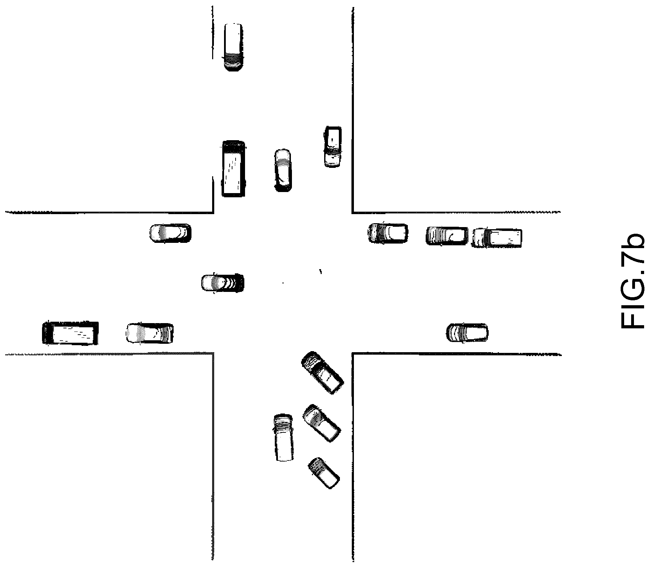

Les figures 7a et 7b représentent, respectivement en vue de droite et en vue de dessus, les résultats de la reconstruction complète d'une scène dans laquelle chaque segment est reconstruit par un modèle géométrique optimal incrusté selon une pose optimale.

**EP 3 729 327 B1**

La méthode selon l'invention peut être mise en oeuvre en tant que programme d'ordinateur, la méthode étant appliquée à une image I préalablement acquise à l'aide d'un capteur 3D, un scanner 3D, un lidar ou une caméra 3D.

L'invention peut être mise en oeuvre en tant que programme d'ordinateur comportant des instructions pour son exécution. Le programme d'ordinateur peut être enregistré sur un support d'enregistrement lisible par un processeur. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués ("*Cloud computing"),* éventuellement selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

Les résultats du procédé selon l'invention peuvent être affichés sur un écran ou toute autre interface homme machine.

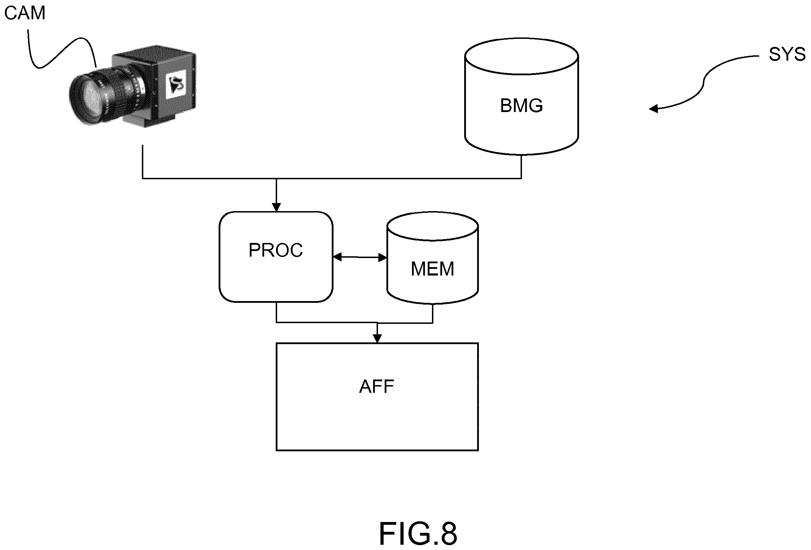

L'invention peut aussi être mise en oeuvre au moyen d'un système de reconnaissance d'objets SYS dont un exemple est décrit à la figure 8. Le système SYS comprend un capteur 3D, un scanner 3D, un lidar ou une caméra 3D ou tout dispositif équivalent CAM, pour capturer une image d'une scène en trois dimensions. Le système comprend en outre une base de données BMG dans laquelle sont sauvegardés plusieurs modèles géométriques prédéfinis. Le système comprend également un processeur PROC et une mémoire MEM pour mettre en oeuvre la méthode de reconnaissance d'objets à partir des points 3D fournis par le dispositif d'acquisition de la scène CAM, et à partir des modèles géométriques contenus dans la base de données BMG.

Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Le système selon l'invention peut utiliser, pour mettre en oeuvre l'invention, un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel).

La reconnaissance des objets de la scène peut être restituée à un utilisateur au travers d'un écran d'affichage AFF ou toute autre interface homme machine.

Sans sortir du cadre de l'invention, le système SYS peut être implémenté de façon différente de l'exemple fourni à la figure 8. Par exemple, les modèles géométriques peuvent être stockés sur un serveur distant avec lequel le système SYS est apte à communiquer.

<u>Références</u>

[1] : "KinectFusion: Real-time dense surface mapping and tracking", Richard A. Newcombe, Shahram Izadi, Otmar Hilliges, David Molyneaux, David Kim, Andrew J. Davison, Pushmeet Kohi, Jamie Shotton, Steve Hodges, Andrew Fitzgibbon. 10th IEEE International Symposium on Mixed and Augmented Reality, 2011.

[2] "Alignment of 3D models", Mohamed Chaouch, Anne Verroust-Blondet

[3] : "A Fast Ground Segmentation Method for 3D Point Cloud", Phuong Chu, Seoungjae Cho, Sungdae Sim, Kiho Kwak and Kyungeun Cho. Journal of information processing systems, Volume 13, N° 3, 2017.

[4] : "Segmentation Based Classification of 3D Urban Point Clouds: A Super-Voxel Based Approach with Evaluation", Ahmad Kamal Aijazi, Paul Checchin and Laurent Trassoudaine. Remote Sensing 2013.

**Revendications**

1. Méthode de reconnaissance d'objets dans une image en trois dimensions, la méthode étant mise en oeuvre par un système et comprenant les étapes de :

   • recevoir (101) une image d'une scène en trois dimensions acquise à l'aide d'un capteur 3D, l'image acquise comprenant une pluralité de points 3D étant chacun associé à un rayon reliant le point 3D au capteur 3D,
   • recevoir (102) une pluralité de modèles géométriques étant chacun associé à une classe d'objets,
   • déterminer (103) une segmentation de la scène de manière à produire une pluralité de segments correspondants chacun à un élément de la scène, un segment étant un groupe de points 3D représentant une cohérence géométrique,
   • déterminer (104) au moins une pose candidate pour chaque segment déterminé et chaque modèle géométrique,
   • pour chaque segment, chaque modèle géométrique et chaque pose candidate :

   - Incruster (105) le modèle géométrique dans la scène selon la pose candidate,
   - Déterminer au moins un ensemble de points 3D parmi : un premier ensemble constitué des points d'intersection entre le modèle géométrique incrusté et les rayons des points dudit segment, un deuxième ensemble constitué des points dudit segment dont les rayons n'intersectent pas le modèle géométrique incrusté, un troisième ensemble constitué des points d'intersection entre le modèle géométrique incrusté et les rayons des points de la scène hormis ledit segment, un quatrième ensemble constitué des points de la scène hormis ledit segment dont les rayons n'intersectent pas le modèle géométrique incrusté,
   - calculer (106) un score de mise en correspondance entre le modèle géométrique incrusté et ledit segment, en fonction d'au moins un critère de mise en correspondance pris parmi : un critère de proximité entre le premier ensemble et ledit segment, un critère d'éloignement entre le deuxième ensemble et le modèle géométrique incrusté, un critère d'éloignement entre le troisième ensemble et ledit segment, un critère de proximité entre le quatrième ensemble et les points de la scène hormis ledit segment.

   • déterminer (107) un score optimal parmi l'ensemble des scores calculés,
   • sélectionner (108) le modèle géométrique et la pose candidate correspondant au score optimal.

2. Méthode de reconnaissance d'objets selon la revendication 1 dans laquelle le premier ensemble de points comprend un premier sous-ensemble constitué des points du premier ensemble qui sont à une distance inférieure ou égale à un seuil prédéterminé des points dudit segment appartenant aux mêmes rayons respectifs et le critère de proximité entre le premier ensemble et ledit segment est fonction d'un premier critère de proximité secondaire pris parmi le cardinal du premier sous-ensemble ou une première fonction de la somme des distances entre les points du premier ensemble et les points dudit segment appartenant aux mêmes rayons respectifs.

3. Méthode de reconnaissance d'objets selon la revendication 2 dans laquelle le premier ensemble de points comprend un second sous-ensemble constitué des points du premier ensemble qui sont à une distance supérieure audit seuil prédéterminé des points dudit segment appartenant aux mêmes rayons respectifs et le critère de proximité entre le premier ensemble et ledit segment est fonction d'un second critère d'éloignement secondaire pris parmi le cardinal du second sous-ensemble ou une fonction de signe opposé à la première fonction.

4. Méthode de reconnaissance d'objets selon l'une des revendications 2 ou 3 dans laquelle le score de mise en correspondance est calculé à partir d'une combinaison linéaire d'au moins deux critères de mise en correspondance dans laquelle les coefficients de pondération appliqués au premier critère de proximité secondaire et au critère de proximité entre le quatrième ensemble et les points de la scène hormis ledit segment sont de signes opposés aux coefficients de pondération appliqués au second critère d'éloignement secondaire, au critère d'éloignement entre le deuxième ensemble et le modèle géométrique incrusté et au critère d'éloignement entre le troisième ensemble et ledit segment.

5. Méthode de reconnaissance d'objets selon l'une des revendications précédentes dans laquelle le critère d'éloignement entre le deuxième ensemble et le modèle géométrique incrusté est pris parmi le cardinal du deuxième ensemble ou une deuxième fonction de la somme des distances minimales entre chaque point du deuxième ensemble et le modèle géométrique incrusté.

6. Méthode de reconnaissance d'objets selon l'une des revendications précédentes dans laquelle le critère d'éloignement entre le troisième ensemble et ledit segment est pris parmi le cardinal du troisième ensemble ou une troisième fonction de la somme des distances minimales entre chaque point du troisième ensemble et ledit segment.

**7.** Méthode de reconnaissance d'objets selon l'une des revendications précédentes dans laquelle le critère de proximité entre le quatrième ensemble et lesdits points de la scène hormis ledit segment est pris égal au cardinal du quatrième ensemble.

**8.** Méthode de reconnaissance d'objets selon l'une des revendications précédentes dans laquelle l'étape (104) de déterminer au moins une pose candidate pour chaque segment et chaque modèle géométrique comprend :

   • la recherche d'au moins une caractéristique géométrique du modèle géométrique,
   • l'élimination d'au moins une hypothèse de pose incompatible avec l'au moins une caractéristique géométrique du modèle géométrique.

**9.** Méthode de reconnaissance d'objets selon la revendication 8 dans laquelle l'au moins une caractéristique géométrique est prise parmi une caractéristique géométrique de symétrie ou une caractéristique géométrique d'orientation.

**10.** Méthode de reconnaissance d'objets selon l'une des revendications précédentes dans laquelle l'étape (103) de déterminer une segmentation de la scène comprend au moins les sous-étapes de :

   • Déterminer une première segmentation d'un premier type d'éléments appelés éléments supports de la scène, par exemple les sols, les murs, les cloisons et les plafonds,
   • Supprimer les points 3D appartenant à un segment de la première segmentation,
   • Déterminer une seconde segmentation d'un second type d'éléments appelés éléments structurants de la scène, par exemple les portes, les fenêtres, les meubles, chaque élément structurant étant connecté à au moins un élément support, les éléments supports supportant les éléments structurants, les éléments structurants reposant sur les éléments supports.

**11.** Méthode de reconnaissance d'objets selon la revendication 10 dans laquelle l'étape (104) de déterminer au moins une pose candidate pour chaque segment comprend :

   • la sélection d'au moins une pose candidate pour chaque segment associé à un élément support de la scène,
   • pour chaque segment associé à un élément structurant connecté audit élément support, l'élimination d'au moins une hypothèse de pose incompatible de l'au moins une pose candidate sélectionnée pour le segment associé audit élément support.

**12.** Méthode de reconnaissance d'objets selon l'une des revendications précédentes comprenant une étape préalable d'alignement et de mise à l'échelle des modèles géométriques.

**13.** Système de reconnaissance (SYS) comprenant un capteur 3D (CAM) pour acquérir une image d'une scène en trois dimensions, l'image acquise comprenant une pluralité de points 3D étant chacun associé à un rayon reliant le point 3D au capteur 3D, le système (SYS) comprenant en outre un dispositif (PROC,MEM,AFF,BMG) configuré pour mettre en oeuvre une méthode de reconnaissance d'objets dans une image en trois dimensions selon l'une quelconque des revendications 1 à 12.

**14.** Programme d'ordinateur comportant des instructions de code de programme pour l'exécution des étapes de la méthode de reconnaissance d'objets dans une image en trois dimensions selon l'une quelconque des revendications 1 à 12, lorsque ledit programme est exécuté sur un ordinateur.

**15.** Support d'enregistrement lisible par un processeur sur lequel est enregistré un programme comportant des instructions pour l'exécution de la méthode de reconnaissance d'objets dans une image en trois dimensions selon l'une quelconque des revendications 1 à 12, lorsque le programme est exécuté par un processeur.

**Patentansprüche**

**1.** Verfahren zum Erkennen von Objekten in einem dreidimensionalen Bild, wobei das Verfahren von einem System implementiert wird und die folgenden Schritte umfasst:

• Empfangen (101) eines mit Hilfe eines 3D-Sensors erfassten Bildes einer dreidimensionalen Szene, wobei das erfasste Bild eine Vielzahl von 3D-Punkten umfasst, die jeweils einem Strahl zugeordnet sind, der den 3D-Punkt mit dem 3D-Sensor verbindet,

• Empfangen (102) einer Vielzahl von geometrischen Modellen, die jeweils einer Klasse von Objekten zugeordnet sind,

• Bestimmen (103) einer Segmentierung der Szene, sodass eine Vielzahl von Segmenten hergestellt wird, die jeweils einem Element der Szene entsprechen, wobei ein Segment eine Gruppe von 3D-Punkten ist, die eine geometrische Kohärenz darstellen,

• Bestimmen (104) mindestens einer Kandidatenpose für jedes bestimmte Segment und jedes geometrische Modell,

• für jedes Segment, jedes geometrische Modell und jede Kandidatenpose:

- Einblenden (105) des geometrischen Modells in die Szene gemäß der Kandidatenpose,
- Bestimmen mindestens eines Satzes von 3D-Punkten aus: einem ersten Satz bestehend aus den Schnittpunkten zwischen dem eingeblendeten geometrischen Modell und den Radien der Punkte des Segments, einem zweiten Satz bestehend aus den Punkten des Segments, deren Radien das eingeblendete geometrische Modell nicht schneiden, einem dritten Satz bestehend aus Schnittpunkten zwischen dem eingeblendeten geometrischen Modell und den Radien der Punkte der Szene außer dem Segment, einem vierten Satz bestehend aus den Punkten der Szene außer dem Segment, deren Radien das eingeblendete geometrische Modell nicht schneiden,
- Berechnen (106) einer Übereinstimmungsbewertung zwischen dem eingeblendeten geometrischen Modell und dem Segment in Abhängigkeit von mindestens einem Übereinstimmungskriterium, ausgewählt aus: einem Kriterium für die Nähe zwischen dem ersten Satz und dem Segment, einem Kriterium für die Entfernung zwischen dem zweiten Satz und dem eingeblendeten geometrischen Modell, einem Kriterium für die Entfernung zwischen dem dritten Satz und dem Segment, einem Kriterium für die Nähe zwischen dem vierten Satz und den Punkten der Szene außer dem Segment;

• Bestimmen (107) einer optimalen Bewertung aus dem Satz von berechneten Bewertungen,

• Auswählen (108) des geometrischen Modells und der Kandidatenpose entsprechend der optimalen Bewertung.

2. Verfahren zum Erkennen von Objekten nach Anspruch 1, wobei der erste Satz von Punkten eine erste Teilmenge umfasst, die aus den Punkten des ersten Satzes besteht, die sich in einem Abstand, der gleich oder kleiner ist als ein vorbestimmter Schwellenwert von den Punkten des Segments, befinden, die zu denselben jeweiligen Radien gehören, und das Kriterium für die Nähe zwischen dem ersten Satz und dem Segment eine Funktion eines ersten sekundären Nähekriteriums ist, ausgewählt aus dem Kardinal der ersten Teilmenge oder einer ersten Funktion der Summe der Abstände zwischen den Punkten des ersten Satzes und den Punkten des Segments, die zu denselben jeweiligen Radien gehören.

3. Verfahren zum Erkennen von Objekten nach Anspruch 2, wobei der erste Satz von Punkten eine zweite Teilmenge umfasst, die aus den Punkten des ersten Satzes besteht, die sich in einem Abstand, der größer ist als der vorbestimmte Schwellenwert von den Punkten des Segments, befinden, die zu denselben jeweiligen Radien gehören, und das Kriterium für die Nähe zwischen dem ersten Satz und dem Segment eine Funktion eines zweiten sekundären Entfernungskriteriums ist, ausgewählt aus dem Kardinal der zweiten Teilmenge oder einer Funktion mit entgegengesetztem Vorzeichen zur ersten Funktion.

4. Verfahren zum Erkennen von Objekten nach einem von Anspruch 2 oder 3, wobei die Übereinstimmungsbewertung auf der Basis einer linearen Kombination von mindestens zwei Übereinstimmungskriterien berechnet wird, wobei die auf das erste sekundäre Nähekriterium und das Kriterium für die Nähe zwischen dem vierten Satz und den Punkten der Szene außer dem Segment angewendeten Gewichtungskoeffizienten entgegengesetzte Vorzeichen zu den auf das zweite sekundäre Entfernungskriterium, das Kriterium für die Entfernung zwischen dem zweiten Satz und dem eingeblendeten geometrischen Modell und das Kriterium für die Entfernung zwischen dem dritten Satz und dem Segment angewendeten Gewichtungskoeffizienten haben.

5. Verfahren zum Erkennen von Objekten nach einem der vorhergehenden Ansprüche, wobei das Kriterium für die Entfernung zwischen dem zweiten Satz und dem eingeblendeten geometrischen Modell aus dem Kardinal des zweiten Satzes oder einer zweiten Funktion der Summe der minimalen Abständezwischen jedem Punkt des zweiten Satzes und dem eingeblendeten geometrischen Modell ausgewählt wird.

**6.** Verfahren zum Erkennen von Objekten nach einem der vorhergehenden Ansprüche, wobei das Kriterium für die Entfernung zwischen dem dritten Satz und dem Segment aus dem Kardinal des dritten Satzes oder einer dritten Funktion der Summe der minimalen Abstände zwischen jedem Punkt des dritten Satzes und dem Segment ausgewählt wird.

**7.** Verfahren zum Erkennen von Objekten nach einem der vorhergehenden Ansprüche, wobei das Kriterium für die Nähe zwischen dem vierten Satz und den Punkten der Szene außer dem Segment gleich dem Kardinal des vierten Satzes genommen wird.

**8.** Verfahren zum Erkennen von Objekten nach einem der vorhergehenden Ansprüche, wobei der Schritt (104) des Bestimmens mindestens einer Kandidatenpose für jedes Segment und jedes geometrische Modell Folgendes umfasst:

• Suchen mindestens einer geometrischen Eigenschaft des geometrischen Modells,
• Eliminieren mindestens einer Posenhypothese, die mit der mindestens einen geometrischen Eigenschaft des geometrischen Modells unvereinbar ist.

**9.** Verfahren zum Erkennen von Objekten nach Anspruch 8, wobei die mindestens eine geometrische Eigenschaft aus einer geometrischen Symmetrieeigenschaft und einer geometrischen Orientierungseigenschaft ausgewählt wird.

**10.** Verfahren zum Erkennen von Objekten nach einem der vorhergehenden Ansprüche, wobei der Schritt (103) des Bestimmens einer Segmentierung der Szene mindestens die folgenden Teilschritte umfasst:

• Bestimmen einer ersten Segmentierung eines ersten Typs von Elementen, die als Trägerelemente der Szene bezeichnet werden, zum Beispiel die Böden, Wände, Trennwände und Decken,
• Löschen der 3D-Punkte, die zu einem Segment der ersten Segmentierung gehören,
• Bestimmen einer zweiten Segmentierung eines zweiten Typs von Elementen, die als Strukturelemente der Szene bezeichnet werden, zum Beispiel die Türen, Fenster, Möbel, wobei jedes Strukturelement mit mindestens einem Trägerelement verbunden ist, wobei die Trägerelemente die Strukturelemente tragenund die Strukturelemente auf den Trägerelementen ruhen.

**11.** Verfahren zum Erkennen von Objekten nach Anspruch 10, wobei der Schritt (104) des Bestimmens mindestens einer Kandidatenpose für jedes Segment Folgendes umfasst:

• Auswählen mindestens einer Kandidatenpose für jedes einem Trägerelement der Szene zugeordneten Segment,
• Eliminieren, für jedes Segment, das einem mit dem Trägerelement verbundenen Strukturelement zugeordnet ist, mindestens einer inkompatiblen Posenhypothese aus der mindestens einen für das dem Trägerelement zugeordnete Segment ausgewählten Kandidatenpose.

**12.** Verfahren zum Erkennen von Objekten nach einem der vorhergehenden Ansprüche, das einen vorherigen Schritt des Ausrichtens und Skalierens der geometrischen Modelle umfasst.

**13.** Erkennungssystem (SYS), das einen 3D-Sensor (CAM) zum Erfassen eines Bildes einer dreidimensionalen Szene umfasst, wobei das erfasste Bild eine Vielzahl von 3D-Punkten umfasst, die jeweils einem Strahl zugeordnet sind, der den 3D-Punkt mit dem 3D-Sensor verbindet, wobei das System (SYS) ferner eine Vorrichtung (PROC, MEM, AFF, BMG) umfasst, die zum Implementieren eines Verfahrens zum Erkennen von Objekten in einem dreidimensionalen Bild nach einem der Ansprüche 1 bis 12 konfiguriert ist.

**14.** Computerprogramm, das Programmcode-Befehle zur Ausführung der Schritte des Verfahrens zum Erkennen von Objekten in einem dreidimensionalen Bild nach einem der Ansprüche 1 bis 12 umfasst, wenn das Programm auf einem Computer ausgeführt wird.

**15.** Prozessorlesbares Aufzeichnungsmedium, auf dem ein Programm aufgezeichnet ist, das Befehle zur Ausführung des Verfahrens zum Erkennen von Objekten in einem dreidimensionalen Bild nach einem der Ansprüche 1 bis 12 enthält, wenn das Programm von einem Prozessor ausgeführt wird.

**Claims**

1. A method for recognising objects in a three-dimensional image, the method being implemented by a system and comprising the following steps:

   • receiving (101) an image of a three-dimensional scene acquired using a 3D sensor, with the acquired image comprising a plurality of 3D points each being associated with a ray connecting the 3D point to the 3D sensor;
   • receiving (102) a plurality of geometric models each associated with a class of objects;
   • determining (103) a segmentation of the scene so as to produce a plurality of segments each corresponding to an element of the scene, with a segment being a group of 3D points representing a geometric coherence;
   • determining (104) at least one candidate pose for each determined segment and each geometric model;
   • for each segment, each geometric model and each candidate pose:

   - embedding (105) the geometric model in the scene according to the candidate pose;
   - determining at least one set of 3D points from among: a first set consisting of the intersection points between the embedded geometric model and the rays of the points of said segment, a second set consisting of the points of said segment whose rays do not intersect the embedded geometric model, a third set consisting of the intersection points between the embedded geometric model and the rays of the points of the scene apart from said segment, a fourth set consisting of the points of the scene apart from said segment whose rays do not intersect the embedded geometric model;
   - computing (106) a matching score between the embedded geometric model and said segment, as a function of at least one matching criterion selected from among: a proximity criterion between the first set and said segment, a distancing criterion between the second set and the embedded geometric model, a distancing criterion between the third set and said segment, a proximity criterion between the fourth set and the points of the scene apart from said segment;

   • determining (107) an optimal score from among the set of computed scores;
   • selecting (108) the geometric model and the candidate pose corresponding to the optimal score.

2. The method for recognising objects according to claim 1, wherein the first set of points comprises a first subset consisting of the points of the first set that are located at a distance that is less than or equal to a predetermined threshold of the points of said segment belonging to the same respective rays and the proximity criterion between the first set and said segment is a function of a first secondary proximity criterion selected from among the cardinal of the first subset or a first function of the sum of the distances between the points of the first set and the points of said segment belonging to the same respective rays.

3. The method for recognising objects according to claim 2, wherein the first set of points comprises a second subset consisting of the points of the first set that are located at a distance that is greater than said predetermined threshold of the points of said segment belonging to the same respective rays and the proximity criterion between the first set and said segment is a function of a second secondary distancing criterion selected from among the cardinal of the second subset or a function with a sign opposite to the first function.

4. The method for recognising objects according to any of claims 2 or 3, wherein the matching score is computed from a linear combination of at least two matching criteria wherein the weighting coefficients applied to the first secondary proximity criterion and the proximity criterion between the fourth set and the points of the scene apart from said segment have opposite signs to the weighting coefficients applied to the second secondary distancing criterion, to the distancing criterion between the second set and the embedded geometric model and to the distancing criterion between the third set and said segment.

5. The method for recognising objects according to any of the preceding claims, wherein the distancing criterion between the second set and the embedded geometric model is selected from among the cardinal of the second set or a second function of the sum of the minimum distances between each point of the second set and the embedded geometric model.

6. The method for recognising objects according to any of the preceding claims, wherein the distancing criterion between the third set and said segment is selected from among the cardinal of the third set or a third function of the sum of the minimum distances between each point of the third set and said segment.

7. The method for recognising objects according to any of the preceding claims, wherein the proximity criterion between the fourth set and said points of the scene apart from said segment is taken as equal to the cardinal of the fourth set.

8. The method for recognising objects according to any of the preceding claims, wherein the step (104) of determining at least one candidate pose for each segment and each geometric model comprises:

    • searching for at least one geometric feature of the geometric model;
    • eliminating at least one pose hypothesis incompatible with the at least one geometric feature of the geometric model.

9. The method for recognising objects according to claim 8, wherein the at least one geometric feature is selected from among a geometric symmetry feature or a geometric orientation feature.

10. The method for recognising objects according to any of the preceding claims, wherein the step (103) of determining a segmentation of the scene comprises at least the following sub-steps of:

    • determining a first segmentation of a first type of elements, called support elements of the scene, for example, the floors, walls, partitions and ceilings,
    • removing the 3D points belonging to a segment of the first segmentation,
    • determining a second segmentation of a second type of elements, called structuring elements of the scene, for example, the doors, windows, furniture, with each structuring element being connected to at least one support element, the support elements supporting the structuring elements, the structuring elements resting on the support elements.

11. The method for recognising objects according to claim 10, wherein the step (104) of determining at least one candidate pose for each segment comprises:

    • selecting at least one candidate pose for each segment associated with a support element of the scene,
    • eliminating, for each segment associated with a structuring element connected to said support element, at least one incompatible pose hypothesis from the at least one candidate pose selected for the segment associated with said support element.

12. The method for recognising objects according to any of the preceding claims, comprising a prior step of aligning and scaling the geometric models.

13. A recognition system (SYS) comprising a 3D sensor (CAM) for acquiring an image of a three-dimensional scene, with the acquired image comprising a plurality of 3D points each associated with a ray connecting the 3D point to the 3D sensor, the system (SYS) further comprising a device (PROC, MEM, AFF, BMG) configured to implement a method for recognising objects in a three-dimensional image according to any one of claims 1 to 12.

14. A computer program comprising program code instructions for executing the steps of the method for recognising objects in a three-dimensional image according to any one of claims 1 to 12, when said program is executed on a computer.

15. A processor-readable storage medium storing a program having instructions for executing the method for recognising objects in a three-dimensional image according to any one of claims 1 to 12, when the program is executed by a processor.

Acquisition image 3D — 101

Modèles géométriques — 102

Détermination segmentation — 103

Détermination poses candidates — 104

Incrustation modèle géométrique — 105

Calcul score de mise en correspondance — 106

Recherche score optimal — 107

Déterminer modèle géométrique et pose optimaux — 108

FIG.1

200

# FIG.2a

EP 3 729 327 B1

FIG.2b

FIG.3a

EP 3 729 327 B1

FIG.3b

EP 3 729 327 B1

FIG.4a

FIG.4b

EP 3 729 327 B1

FIG.4c

EP 3 729 327 B1

FIG.4d

500

501

FIG.5a

FIG.5b

FIG.5c

FIG.5d

FIG.5e

FIG.5f

FIG.5g

500

501

FIG.5h

EP 3 729 327 B1

FIG.5i

FIG.5j

501

500

FIG.5k

FIG.5I

FIG.5m

500

501

FIG.5n

FIG.5o

501

500

FIG.5p

501

500

FIG.6a

FIG.6b

FIG.6c

FIG.6d

FIG.7a

EP 3 729 327 B1

FIG.7b

FIG.8

## RÉFÉRENCES CITÉES DANS LA DESCRIPTION

**Documents brevets cités dans la description**

- EP 2549434 A
- US 20160154999 A
- US 9396545 B
- US 20150288947 A
- US 8885925 B

**Littérature non-brevet citée dans la description**

- **RICHARD A. NEWCOMBE** ; **SHAHRAM IZADI** ; **OTMAR HILLIGES** ; **DAVID MOLYNEAUX** ; **DAVID KIM** ; **ANDREW J. DAVISON** ; **PUSHMEET KOHI** ; **JAMIE SHOTTON** ; **STEVE HODGES** ; **ANDREW FITZGIBBON**. KinectFusion: Real-time dense surface mapping and tracking. *10th IEEE International Symposium on Mixed and Augmented Reality*, 2011
- **MOHAMED CHAOUCH** ; **ANNE VERROUST-BLONDET**. *Alignment of 3D models*
- **PHUONG CHU** ; **SEOUNGJAE CHO** ; **SUNGDAE SIM** ; **KIHO KWAK** ; **KYUNGEUN CHO**. A Fast Ground Segmentation Method for 3D Point Cloud. *Journal of information processing systems*, 2017, vol. 13 (3)
- **AHMAD KAMAL AIJAZI** ; **PAUL CHECCHIN** ; **LAURENT TRASSOUDAINE**. Segmentation Based Classification of 3D Urban Point Clouds: A Super-Voxel Based Approach with Evaluation. *Remote Sensing*, 2013